(19) Europäisches Patentamt
European Patent Office
Office européen des brevets

(11) **EP 3 423 183 B1**

(12) **EUROPÄISCHE PATENTSCHRIFT**

(45) Veröffentlichungstag und Bekanntmachung des Hinweises auf die Patenterteilung:
**20.04.2022  Patentblatt 2022/16**

(21) Anmeldenummer: **17707360.8**

(22) Anmeldetag: **02.03.2017**

(51) Internationale Patentklassifikation (IPC):
**B01J 19/00** (2006.01)   **B01J 19/24** (2006.01)
**B01D 11/00** (2006.01)   **B01J 8/18** (2006.01)

(52) Gemeinsame Patentklassifikation (CPC):
**B01D 11/0442; B01D 11/00; B01D 11/04; B01J 4/004; B01J 8/226; B01J 19/006; B01J 19/244; B01J 19/246;** B01J 2208/0084; B01J 2208/00911; B01J 2219/00768; B01J 2219/0077; B01J 2219/00774

(86) Internationale Anmeldenummer:
**PCT/EP2017/054967**

(87) Internationale Veröffentlichungsnummer:
**WO 2017/149099 (08.09.2017 Gazette 2017/36)**

(54) **MEHRPHASEN-SCHLAUFENREAKTOR UND VERFAHREN ZUM BETRIEB**

MULTI-PHASE LOOP REACTOR AND METHOD FOR OPERATING SAME

REACTEUR A ECOULEMENT EN BOUCLE MULTIPHASES ET SON PROCEDE DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2016  EP 16158578**

(43) Veröffentlichungstag der Anmeldung:
**09.01.2019  Patentblatt 2019/02**

(73) Patentinhaber: **Rheinisch-Westfälische Technische Hochschule (RWTH) Aachen 52062 Aachen (DE)**

(72) Erfinder:
• **BEDNARZ, Andreas 53909 Zülpich (DE)**
• **JUPKE, Andreas 51375 Leverkusen (DE)**
• **SCHMIDT, Markus 76356 Weingarten (DE)**
• **WEBER, Benedikt 53894 Mechernich (DE)**

(74) Vertreter: **Lahrtz, Fritz et al Simmons & Simmons LLP Prinzregentenstraße 68 81675 München (DE)**

(56) Entgegenhaltungen:
WO-A1-2013/079075     US-A- 4 482 524
US-B1- 6 759 027

**Beschreibung**

Die Erfindung betrifft einen Mehrphasen-Schlaufenreaktor und ein Verfahren zum Betrieb eines Mehrphasen-Schlaufenreaktors.

**Stand der Technik**

Seit einigen Jahren bietet sogenannte weiße Biotechnologie in verschiedenen Forschungsprojekten und in ersten Industrieanlagen neue Möglichkeiten, um den Rohstoffanteil von Erdöl in der chemischen Industrie zu senken. Anstelle von Erdöl werden nachwachsende Rohstoffe als Edukte verwendet. Diese können in einer Fermentation aufgeschlossen und umgewandelt werden.

Für viele Bioprozesse ist eine Sauerstoffversorgung der Mikroorganismen unerlässlich. Eingesetzt werden hierzu beispielsweise begaste Rührkessel, Blasensäulen oder Airlift-Reaktoren. Ein Vorteil des Airlift-Reaktors gegenüber anderen Apparaten ist der geringe Energiebedarf bei gleichbleibendem Gas-Flüssigkeit-Massentransport.

Die hergestellten Produkte können allerdings toxisch oder inhibierend auf die Mikroorganismen wirken. Durch eine gezielte Abtrennung der Produkte im Bioreaktor kann dieser Effekt vermindert werden. Die Kopplung einer Fermentation und eines Trennschritts, wie zum Beispiel eine Extraktion, kann die Produktivität eines Bioreaktors steigern.

Aus SAJC, L., OBRADOVIC, B., VUKOVIC, D., BUGARSKI, B., GRUBISIC, D., & VUNJAK-NOKAVOVIC, G. 1995. Hydrodynamics and Mass Transfer in a Four-Phase External Loop Air Lift Bioreactor, American Chemical Society and American Institute of Chemical Engineers, Vol. 11, 420-428, ist beispielsweise ein Reaktor bekannt, in dem ein vierphasiges System untersucht wird. Eine kontinuierliche Phase besteht aus Wasser oder einem "Morashige und Skroog Medium". Eine gasförmige Phase, ein nicht-wässriges Lösungsmittel und immobilisierte Zellen werden im unteren Bereich des Aufstiegsrohrs dispergiert. Die entstehenden Blasen und Tropfen steigen auf und reißen das Wasser, welches die kontinuierliche Phase darstellt, mit, wodurch eine rotierende Strömung entsteht. Am oberen Ende des Downcomers koalesziert die disperse Lösungsmittelphase und wird über einen Abscheider zurück in den Disperser geführt. Bei dem dargestellten Mehrphasenreaktor werden alle Phasen im Gleichstrom geführt, wodurch die Skalierbarkeit sehr eingeschränkt ist. Das Entmischen der Phasen ist sehr aufwändig. In beiden Schlaufenhälften wird ein einziger Prozess durchgeführt.

Aus EP 1 060 787 B1 sind ein Verfahren und eine Vorrichtung zur Durchführung einer Dreiphasenreaktion bekannt, an der eine gasförmige und zwei nichtgasförmige Phasen beteiligt sind, von denen wenigstens eine flüssig ist. Die zwei nicht-gasförmigen Phasen werden dabei in einem geschlossenen Kreislauf und im Gleichstrom in einem Reaktor in Zirkulation gebracht, wobei die gasförmige Phase in den unteren Teil eines Zentralbereichs des Reaktors injiziert wird, sodass eine aufsteigende Zirkulation im Zentralbereich und eine absteigende Zirkulation in einem Ringbereich des Reaktors erzeugt wird, der durch eine Zylinderwand vom Zentralbereich getrennt ist. Die überschüssigen gasförmigen Phasen und eine flüssige Fraktion werden in einem oberen Bereich des Reaktors voneinander getrennt und wiedergewonnen.

Alternative Membranverfahren, beispielsweise beschrieben in LE-CLECH, P., CHEN, V., & FANE, T. A. G. 2006. Fouling in membrane bioreactors used in wastewater treatment, Journal of Membrane Science, Vol. 284, 17-53, haben Probleme mit Fouling und besitzen einen langsameren Stofftransport. Sie können daher nicht über eine lange Zeit stabil betrieben werden.

Aus US 4,482,524 A ist ein Schlaufenreaktor bekannt, bei dem zwei Gasphasen räumlich getrennt voneinander eingelassen werden, wobei eine der Gasphasen zu einer kontinuierlichen Phase im Gegenstrom strömt und die andere im Gleichstrom. Nachteilig an der dort gezeigten Vorrichtung ist, dass die Phasentrennung viel Raum einnimmt, was die spezifische Leistung des Reaktors stark einschränkt. Die Anordnung eines Systems ineinander verschachtelter Zylinder zueinander bewirkt, das etwa 20% des aktiven Reaktors nicht für den Stofftransport zur Verfügung steht. Weiterhin nachteilig sind die Flächenverhältnisse von Up- zu Downcomer von mehr als 12 zu 1.

Es ist eine Aufgabe der Erfindung, einen Mehrphasen-Schlaufenreaktor und ein Verfahren zu dessen Betrieb bereitzustellen, welche eine In-situ-Produktabtrennung ermöglichen. Insbesondere ist es eine weitere Aufgabe der Erfindung, einen begasten Reaktor mit integrierter Extraktion bereitzustellen.

**Offenbarung der Erfindung**

Ein erfindungsgemäßer Mehrphasen-Schlaufenreaktor ist in dem Anspruch 1 definiert und weist einen inneren Zylinder und einen äußeren Zylinder unterschiedlichen Durchmessers auf, welche derart angeordnet sind, dass sie zwischen sich einen Zylinderringspalt bilden, bzw. definieren.

In einer Ausführungsform fungiert der innere Zylinder als ein Upcomer und der Zylinderringspalt als ein Downcomer, sodass eine kontinuierliche Phase eine Schlaufenströmung ausführen kann. In einer weiteren Ausführungsform fungiert der innere Zylinder als ein Downcomer und der Zylinderringspalt als ein Upcomer, sodass eine kontinuierliche Phase eine Schlaufenströmung ausführen kann.

Bei dem Mehrphasen-Schlaufenreaktor sind erfindungsgemäß ein erster Einlasser für eine erste disperse Phase für den inneren Zylinder und ein zweiter Einlasser für eine zweite disperse Phase für den Zylinderringspalt derart angeordnet, dass die erste und die zweite disperse Phase räumlich getrennt voneinander in die kontinuierliche Phase dispergiert werden können, wobei eine der ersten oder zweiten dispersen Phasen die Schlaufenströmung antreiben, bzw. erzeugen kann und die andere der ersten und zweiten dispersen Phasen einen Gegenstrom zu der Schlaufenströmung bilden kann.

Die Phase im Upcomer, welche entweder die erste disperse Phase oder die zweite disperse Phase sein kann, weist einen ausreichenden Volumenstrom auf, um in der kontinuierlichen Phase eine Schlaufenströmung mit aufwärts gerichteter Strömung im Upcomer und abwärts gerichteter Strömung im Downcomer zu erzeugen. Im Downcomer wird gleichzeitig die weitere Phase eingeleitet. Diese Phase strömt im Gegenstrom zu der kontinuierlichen Phase. Der Volumenstrom der weiteren Phase ist so gewählt, dass die Schlaufenströmung erhalten bleibt. Somit wurde ein Schlaufenreaktor mit einem Gegenstrom ausgestattet.

Der Aufbau besteht im Prinzip aus zwei ineinander liegenden Zylindern. Die Schlaufenströmung kann in beiden Zirkulationsrichtungen erzeugt werden. Ist beispielsweise die erste Phase die Schlaufen erzeugende Phase, dann fungiert der innere Zylinder als Upcomer und der Ringspalt zwischen den beiden Zylindern als Downcomer. Für den Fall, dass die zweite disperse Phase die Schlaufenströmung erzeugt, fungiert der Zylinderringspalt als Upcomer und der innere Zylinder als Downcomer.

Den Einlassern entgegengesetzt ist außerdem eine Trennvorrichtung vorgesehen, die eine Vermischung der dispersen Phasen zumindest verhindert und bevorzugt vollständig verhindert. Entsprechend liegen in den beiden voneinander getrennten Bereichen des Upcomers und Downcomers jeweils nur eine der dispersen Phasen vor.

Um die Funktion des Reaktors zu gewährleisten, ist vorgesehen, dass die Querschnittsfläche $A_U$ des Upcomers zu der Querschnittsfläche $A_D$ des Downcomers in folgendem Zusammenhang steht:

$$\frac{1}{2} \leq \frac{A_U}{A_D} \leq \frac{2}{1},$$

Damit ist die Geometrie des Reaktors so angepasst, dass die kontinuierliche Phase eine flüssige oder gasförmige Phase oder eine Dispersion sein kann und dass entweder eine der ersten und zweiten dispersen Phasen eine flüssige Phase sein kann und die andere der ersten und zweiten dispersen Phasen eine gasförmige Phase sein kann oder dass beide dispersen Phasen flüssige Phasen sein können.

Bei dem Mehrphasen-Schlaufenreaktor ist gemäß einer ersten Ausführungsform vorgesehen, dass der erste Einlasser für die erste disperse Phase in einem unteren Bereich des inneren Zylinders angeordnet ist. Alternativ oder zusätzlich hierzu ist der erste Einlasser oder ein Teil dessen unterhalb des inneren Zylinders angeordnet.

Weiterhin ist in dieser Ausführungsform beispielsweise vorgesehen, dass der zweite Einlasser für die zweite disperse Phase in einem unteren Bereich des Zylinderringspaltes angeordnet ist. Alternativ oder zusätzlich hierzu ist der zweite Einlasser oder ein Teil dessen unterhalb des Zylinderringspaltes angeordnet.

Die Trennvorrichtung ist in der erfindungsgemäßen Ausführungsform entsprechend im oberen Bereich des Mehrphasen-Schlaufenreaktors vorgesehen.

In einer zweiten Ausführungsform der Erfindung sind die Einlasser der ersten und zweiten dispersen Phasen im oberen Bereich oder oberhalb des inneren Zylinders angesiedelt sind und die Trennvorrichtung entsprechend im unteren Bereich. Die Bezeichnung Upcomer bezieht sich in diesem Kontext auf den Abschnitt mit der schlaufeninduzierenden Phase und der Downcomer für die weitere disperse Phase.

Im Rahmen der Erfindung wird unter innerem und äußerem Zylinder jegliche Anordnung verstanden, welche als Upcomer und Downcomer fungieren kann. Dabei können die Zylinder zum Beispiel über ihre gesamte Höhe zylinderförmig ausgebildet sein oder lediglich zylinderförmige Abschnitte aufweisen. Auch Objekte, die über die gesamte Höhe oder zumindest abschnittsweise kegelförmig, trichterförmig oder mathematisch betrachtet eigentlich Prismen sind, können im Rahmen der vorliegenden Offenbarung als Zylinder bezeichnet werden. Insbesondere sind mehreckige Geometrien denkbar, beispielsweise mit quadratischem Querschnitt. Weitere Ausführungsformen der Zylinder sind z. B. Kessel oder Fässer. Insbesondere sind nach oben bzw. unten hin verbreiterte Formen möglich und weisen spezielle Vorteile auf, beispielsweise, um hier gezielt die Strömungsgeschwindigkeit herabzusetzen. Ebenso sind sich nach unten bzw. oben hin verjüngende Formen möglich, um hier gezielt die Strömungsgeschwindigkeit heraufzusetzen.

Nach der Erfindung umfasst die Trennvorrichtung zumindest eine Auffangvorrichtung für die erste und/oder zweite disperse Phase.

Die Auffangvorrichtung ist bevorzugt axialsymmetrisch zum inneren Zylinder angeordnet, kann aber auch asymmetrisch versetzt sein. Für den Fall, dass die Auffangvorrichtung als ein Zylinder, ein Trichter oder ein Kegel ausgebildet ist, kann die Auffangvorrichtung insbesondere dazu dienen, sowohl die erste als auch die zweite disperse Phase oder ihre Reaktionsprodukte aufzufangen. Sie kann z. B. einen Abfluss, Ablauf oder Überlauf zur Abführung der dispersen Phasen oder ihrer Reaktionsprodukte aufweisen. Trichterförmige Ausführungsformen der Auffangvorrichtung sind dann vorteilhaft, wenn eine der dispersen Phasen schlecht koalesziert oder zur Schaumbildung neigt. Die Kegelform ermöglicht der Phase ein größeres Volumen, um die Phasentrennung zu ermöglichen.

Die Auffangvorrichtung kann an der unteren, bzw. je nach Ausführungsform oberen Abschlusskante sowohl einen kleineren Durchmesser als der innere Zylinder aufweisen als auch einen größeren Durchmesser als der innere Zylinder an dessen oberer bzw. unterer Abschlusskante.

In einer bevorzugten Ausführungsform der Erfindung steht die Querschnittsfläche $A_T$ der Auffangvorrichtung für die nicht schlaufeninduzierende Phase zu der Querschnittsfläche $A_D$ des Downcomers in folgendem Zusammenhang:

$$\frac{1}{4} \leq \frac{A_T}{A_D} \leq 1 \, ,$$

bevorzugt

$$\frac{1}{3} \leq \frac{A_T}{A_D} \leq \frac{1}{2} \, .$$

Ist die Querschnittsfläche $A_T$ der Auffangvorrichtung kleiner als die Querschnittsfläche $A_D$ des Downcomers, so hat dies den Vorteil, dass die schlaufeninduzierende Phase mehr Raum zum Austritt hat. Die größere Querschnittsfläche dient einer Reduktion der Strömungsgeschwindigkeit der kontinuierlichen Phase, was ein Mitreißen der schlaufeninduzierenden Phase in den Downcomer reduziert bzw. verhindert. Zudem wird durch das Strömungsprofil der kontinuierlichen Phase im Eintritt in den Downcomer die nicht schlaufeninduzierende disperse Phase bevorzugt von diesem Bereich abgelenkt.

Nach der erfindungsgemäßen Ausführungsform ist die Auffangvorrichtung in den inneren Zylinder eingeschoben angeordnet. Alternativ hierzu kann der innere Zylinder in die Auffangvorrichtung eingeschoben angeordnet sein. Besonders bevorzugt wird dabei folgende Vorgabe eingehalten:

$$0 \leq \frac{H}{D_I} \leq \frac{1}{4} \, .$$

H bezeichnet dabei die Höhendifferenz zwischen einer Kante, z. B. Unterkante, d. h. unteren Abschlusskante der Auffangvorrichtung und der Kante, z. B. Oberkante des inneren Zylinders und $D_I$ den Durchmesser des inneren Zylinders. Bei einer derartigen Ausgestaltung kann die Mitnahme der zweiten dispersen Phase in den Innenbereich des inneren Zylinders durch die Schlaufenströmung verhindert werden.

Nach einer bevorzugten Ausführungsform weist die Trennvorrichtung eine Ablenkvorrichtung zur Beeinflussung der Strömung zumindest einer der dispersen Phasen auf. Die Ablenkvorrichtung ist dabei bevorzugt am inneren Zylinder befestigt oder einstückig mit diesem ausgebildet. Insbesondere kann die Trennvorrichtung sowohl die Ablenkvorrichtung als auch die oben beschriebene Auffangvorrichtung aufweisen. Durch Anordnung der Ablenkvorrichtung wird die Vermischung der dispersen Phasen weiter verhindert.

In einer bevorzugten Ausführungsform ist die Ablenkvorrichtung vom inneren Zylinder zwischen 0° und 60°, weiter bevorzugt zwischen 20° und 45° abgewinkelt. Eine derartige Ablenkvorrichtung kann ein Ablenkblech sein, wobei der Begriff Blech in diesem Zusammenhang nicht einschränkend zu verstehen ist, sondern selbstverständlich beliebige geeignete Materialien hierfür eingesetzt sein können. Die Ablenkvorrichtung kann nach innen oder nach außen abgewinkelt sein. Es können auch Ablenkvorrichtungen vorgesehen sein, die einen Abschnitt aufweisen, der nach innen abgewinkelt ist, als auch einen Abschnitt, der nach außen abgewinkelt ist. Der Übergang vom inneren Zylinder zur Ablenkvorrichtung kann dabei auch rund ausgeführt werden, um die Strömung besser zu leiten. Zusätzlich kann die Ablenkvorrichtung so angepasst werden, dass sie den Stromlinien folgt.

Gemäß einer weiteren bevorzugten Ausführungsform umfasst die Trennvorrichtung zusätzlich oder alternativ hierzu einen Verdrängerkörper zur Beeinflussung der Strömung zumindest einer der dispersen Phasen. Der Verdrängerkörper ist bevorzugt am inneren Zylinder befestigt oder einstückig mit diesem ausgebildet. Insbesondere bevorzugt ist die Anordnung an einem Endstück des inneren Zylinders, d. h. an dessen Stirnseite. Der Verdrängerkörper kann massiv oder auch zum Teil oder ganz hohl ausgebildet sein. Der Verdrängerkörper kann nach innen und/oder nach außen vorstehende Teile aufweisen, insbesondere Nasen oder Vorsprünge. Die Kanten des Verdrängerkörpers weisen bevorzugt abgerundete Ecken auf, um die Strömung gut zu leiten.

Die Einlasser werden auch als Disperser bezeichnet. Die Einlasser können ringförmig sein, allerdings sind im Prinzip beliebige Geometrien möglich. Vorteilhaft sind die Einlasser in Form und Größe derart ausgebildet, dass sie die Schlaufenströmung nicht zu sehr stören. Die Einlasser sind bevorzugt axialsymmetrisch zum inneren Zylinder angeordnet, können aber auch asymmetrisch versetzt sein. Sie können beispielsweise als dünne kreisförmig gebogene Rohre, Rohrsegmente oder Düsen ausgebildet sein, welche Löcher aufweisen oder beispielsweise aus einem porösen Material, z. B. Sintermaterial gefertigt sind. Durch Wahl der Porosität der Ausströmfläche bzw. durch Festlegung der Anzahl und Durchmesser der Löcher kann der Volumenanteil und die Tropfen- bzw. Blasengrößenverteilung des Eintrittsstroms eingestellt werden. Beispielsweise kann als Gaseinlasser ein mit Öffnungen versehenes Teflon-Schlauchende benutzt werden.

Gemäß einer bevorzugten Ausführungsform sind die Einlasser als Ringeinlasser ausgebildet. Alternative Ausführungsformen können beispielsweise Einlassduschen umfassen, bei welchen nicht von einem linienförmigen, ringförmigen Ort aus eingelassen wird, sondern von einem flächigen Bereich aus. Weiterhin ist ein Einlass über Ringsegmente oder punktuell über Düsen möglich.

Nach einer bevorzugten Ausführungsform ist der erste Einlasser nach folgender Vorgabe ausgebildet:

$$0 \leq \frac{D_{DI}}{D_I} \leq \frac{2}{3},$$

wobei $D_{DI}$ den Durchmesser des ersten Einlassers und $D_I$ den Durchmesser des inneren Zylinders bezeichnen.

Besonders bevorzugt ist der Durchmesser des ersten Einlassers weniger als 50%, noch weiter bevorzugt weniger als 30% und insbesondere noch weiter bevorzugt weniger als 20% des Durchmessers des inneren Zylinders groß ausgebildet. Vorteilhaft weist der Einlasser Abmessungen auf, um eine ausreichende Beabstandung vom inneren Zylinder von der Wand des inneren Zylinders zu ermöglichen. Somit wird die erste disperse Phase von der Schlaufenströmung nicht mitgerissen.

Nach einer bevorzugten Ausführungsform ist der zweite Einlasser nach folgender Vorgabe ausgebildet:

$$1{,}05 \cdot D_I \leq D_{DA} \leq 0{,}95 \cdot D_A$$

Hierdurch kann gewährleistet werden, dass die zweite disperse Phase von der Schlaufenströmung nicht mitgerissen wird.

In der erfindungsgemäßen Ausführungsform steht die Querschnittsfläche $A_U$ des Upcomers zu der Querschnittsfläche $A_D$ des Downcomers im folgenden Zusammenhang:

$$\frac{1}{2} \leq \frac{A_U}{A_D} \leq \frac{2}{1},$$

bevorzugt

$$\frac{2}{3} \leq \frac{A_U}{A_D} \leq \frac{3}{2}.$$

Zusätzlich hierzu oder alternativ hierzu weist der Upcomer im Querschnitt bevorzugt eine kleinere Fläche auf als der Downcomer.

Für den Fall, dass die kontinuierliche Phase eine flüssige Phase ist und die dispersen Phasen eine flüssige Phase und eine gasförmige Phase sind, steht die Querschnittsfläche $A_G$, durch die die gasförmige Phase aufsteigt, zu der Querschnittsfläche $A_F$, durch die die flüssige Phase aufsteigt, in folgendem Zusammenhang:

$$\frac{1}{4} \leq \frac{A_G}{A_F} \leq 1,$$

bevorzugt

$$\frac{1}{3} \le \frac{A_G}{A_F} \le \frac{1}{2} \; .$$

Die gasförmige Phase benötigt aufgrund der höheren Dichtedifferenz und der daraus resultierenden Kraftübertragung auf die kontinuierliche Phase eine geringere Querschnittsfläche als die flüssige Phase. Die daraus resultierende Strömungsgeschwindigkeit der kontinuierlichen Phase darf im Downcomer die Sedimentationsgeschwindigkeit der dort aufsteigenden dispersen Phase nicht überschreiten, damit diese nicht mitgerissen wird.

Nach einem weiteren Aspekt der Erfindung wird ein Verfahren zum Betrieb eines Mehrphasen-Schlaufenreaktors mit einem inneren Zylinder und einem äußeren Zylinder unterschiedlichen Durchmessers angegeben, welche derart angeordnet sind, dass sie zwischen sich einen Zylinderringspalt bilden, wobei der innere Zylinder oder der Zylinderringspalt als ein Upcomer und der jeweils andere entsprechend als ein Downcomer fungieren, so dass eine kontinuierliche Phase eine Schlaufenströmung ausführt.

Dabei ist vorgesehen, dass eine erste disperse Phase und eine zweite disperse Phase räumlich getrennt voneinander eingelassen werden, so dass eine der ersten oder zweiten dispersen Phasen im Gleichstrom und die jeweils andere im Gegenstrom zur kontinuierlichen Phase strömen.

Dabei ist zum Beispiel die erste disperse Phase eine flüssige Phase und die zweite disperse Phase eine gasförmige Phase. Alternativ ist die erste disperse Phase eine gasförmige Phase und die zweite disperse Phase eine flüssige Phase. Weiter alternativ hierzu sind beide disperse Phasen flüssige Phasen. Die kontinuierliche Phase ist bevorzugt eine flüssige Phase. Besonders bevorzugte Ausführungsformen der Erfindung betreffen Fermentationsbrühen, die mit einer flüssigen Extraktionsphase und mit einer gasförmigen Phase (entsprechend eines Airliftreaktors) gekoppelt sind.

In einer ersten Ausführungsform wird die erste disperse Phase in einem unteren Bereich oder unterhalb des inneren Zylinders eingelassen und die zweite disperse Phase in einem unteren Bereich oder unterhalb des Zylinderringspaltes eingelassen. Im oberen Bereich des Mehrphasen-Schlaufenreaktors werden die erste und die zweite disperse Phase oder ihre Reaktionsprodukte räumlich getrennt voneinander abgeführt.

Die zweite Ausführungsform betrifft ein um 180 Grad umgedrehtes Design, in der zwei Phasen, welche spezifisch schwerer sind als die kontinuierliche Phase, die dispersen Phasen darstellen. In dieser Variante können sowohl gasförmige als auch flüssige Phasen als kontinuierliche Phase eingesetzt werden. Die Zufuhr der ersten und zweiten dispersen Phasen ist dementsprechend im oberen Bereich des Apparates angesiedelt und die Trennvorrrichtung im unteren Bereich.

Als kontinuierliche Phase wird im Rahmen der Erfindung insbesondere eine flüssige Phase bezeichnet, welche auch eine Dispersion sein kann. Insbesondere können in der Dispersion Feststoffe dispergiert sein (Suspension), oder es kann sich um eine Emulsion handeln. Die kontinuierliche Phase kann beispielsweise einen Feststoff wie Mikroorganismen oder Katalysatoren aufweisen, sodass ein Vierphasensystem vorliegen kann.

Die dispersen Phasen können sowohl abgebende als auch aufnehmende Phasen sein. Bei einem Mikroorganismen enthaltenden Fermentationsreaktor ist eine abgebende Phase beispielsweise eine Sauerstoff enthaltende Phase und eine aufnehmende Phase beispielsweise eine ein toxisches Edukt abgebende Phase, deren Reaktionsprodukt parallel dazu abgeführt wird. Demnach können ein inhibierendes oder toxisches Substrat bereitgestellt als auch ein inhibierendes oder toxisches Produkt abgetrennt werden.

In einer Ausführungsform der Erfindung wird in dem Reaktor eine begaste Fermentation mit einer Extraktion gekoppelt. Insbesondere kann vorgesehen sein, dass die kontinuierliche Phase eine Fermentationsphase, eine der dispersen Phasen ein Nährgas, insbesondere etwa Luft, Sauerstoff, Synthesegas oder Kohlenstoffdioxid, und die andere disperse Phase ein Extraktionsmittel, insbesondere ein organisches Extraktionsmittel wie ein biokompatibles Lösungsmittel, sind oder zumindest enthalten. Als Extraktionsphase können beliebige Lösungsmittel wie beispielsweise Kerosin eingesetzt werden. Neben einem reinen Lösungsmittel können dem Lösungsmittel variierende Anteile an weiteren Komponenten zugegeben werden. Dies können beispielsweise Reaktivextraktionsmittel für eine selektive Abtrennung spezifischer Komponenten sein. Ein Einsatz purer Reaktivextraktionsmittel ist auch möglich.

Der Mikroorganismus in der kontinuierlichen Phase wird durch die gasförmige Phase mit Sauerstoff und gegebenenfalls mit weiteren Hilfsstoffen versorgt. Die organische Phase trennt im Gegenstrom ein Produkt fortlaufend aus der kontinuierlichen Phase ab, um eine Produktinhibierung zu verhindern, und kann auch die Fermentationsbrühe fortlaufend mit weiteren Nährstoffen und Substraten versorgen.

Dabei wird die gasförmige Phase separat von der Extraktionsphase abgeführt. Die apparative Trennung von Begasung und Extraktion hat den Vorteil, dass das Extrakt, d.h. die Lösungsmittelphase, während der Koaleszenz nicht durch Gasblasen, die durch die Koaleszenzschicht steigen könnten, dispergiert wird, wodurch die Neigung zur Emulsionsbildung verringert wird.

In einer alternativen Ausführungsform der Erfindung kann die kontinuierliche Phase eine fluide chemische Phase sein, eine oder mehrere der drei Phasen einen Katalysator enthalten als auch ein Edukt bereitstellen und eine Phase ein Extraktionsmittel darstellen, sodass Einsatzbereiche auch im Bereich der Chemie und insbesondere im Bereich von Mehrphasenreaktionen, beispielsweise für die Herstellung von Produkten bzw. Zwischenprodukten der chemischen Industrie oder pharmazeutischer Wirkstoffe möglich sind.

Nach einer bevorzugten Ausführungsform wird durch Festlegen der Volumenströme der dispersen Phasen die Geschwindigkeit der Schlaufenströmung der kontinuierlichen Phase eingestellt. Bei gleichartigen Phasen definiert der größere Volumenstrom dabei den Upcomer. Die Fließgeschwindigkeit der kontinuierlichen Phase im Downcomer ist dabei kleiner als die Aufstiegsgeschwindigkeit der im Downcomer dispergierten Phase, sodass die Schlaufenströmung erhalten bleibt und die zweite disperse Phase nicht mitgerissen wird.

Das Verfahren kann bei atmosphärischem Druck durchgeführt werden. Alternativ hierzu kann das Verfahren bei höherem Druck durchgeführt werden. Bei höheren Drücken als Normaldruck kann beispielsweise bei Bioreaktoren ein höherer Sauerstoffübertrag von der Gasphase in die Flüssigkeit erreicht werden. Auch Vakuum ist denkbar, z. B. um über die Gasphase flüchtige Komponenten aus der flüssigen Phase entfernen zu können.

Es werden weiterhin auch Vorrichtungen zur Durchführung des Verfahrens offenbart, wobei die Vorrichtungen zur Durchführung des Verfahrens eingerichtet sind. Die oben genannten Vorrichtungen können insbesondere auch zur Verwendung in den beschriebenen Verfahren ausgebildet sein. Umgekehrt können die Verfahren unter Verwendung der oben beschriebenen Vorrichtungen ausgeführt werden, sodass die Merkmale, welche für die Verfahren offenbart wurden, entsprechend auch für die Vorrichtungen offenbart werden, und umgekehrt.

## Vorteile der Erfindung

In Bioreaktoren und in anderen Systemen werden häufig mehrere Phasen eingesetzt. Deren Vermischung führt häufig zu der Entwicklung von Schäumen und Dispersionen, die die Auftrennung erschweren können. Mit der Erfindung können drei oder mehr Phasen sehr intensiv und ohne Transporthindernisse in Kontakt miteinander gebracht werden. Vorteilhaft ist eine in-situ Produktabtrennung im Gegenstrom oder im Gleichstrom möglich. Die gegenseitige Dispergierung und die Entwicklung von Schäumen und Dispersionen werden dabei effektiv verhindert.

Bei dem Bioreaktor werden die Begasung und die Extraktion vorteilhaft in örtlich getrennten Bereichen im Reaktor angesiedelt. Die Kopplung der Fermentation und des Trennschritts, wie zum Beispiel der Extraktion, steigert die Produktivität und reduziert die Downstream-Aufbereitung im Austrittsstrom durch die erhöhte Produktkonzentration. Der Einsatz der Extraktion führt aufgrund eines besseren Phasenübergangs zu mehr Stofftransport, sodass der Bioreaktor aufgrund einer kontinuierlichen Abtrennung von inhibierenden Komponenten über einen längeren Zeitraum kontinuierlich produzieren kann. Zudem können über die dispersen Phasen Substrate bzw. Edukte, die auch inhibierend oder toxisch wirken können, bereitgestellt werden. Dieses Konzept kann aber auch für Mehrphasenreaktionen mit integrierter Produktabtrennung und Eduktbereitstellung verwendet werden.

Eine Anwendung in der katalytischen Reaktionstechnik für Mehrphasenreaktionen erscheint vielversprechend. Weitere Anwendungen gibt es beispielsweise in der Pharmakologie, Petrochemie und Biotechnologie.

## Kurzbeschreibung der Figuren

Die dargestellten und im Folgenden mit Bezug zu den Figuren beschriebenen Ausführungsbeispiele sind für den Gegenstand der Erfindung nicht als einschränkend aufzufassen. Dem Fachmann werden eine Vielzahl von Abwandlungen ersichtlich sein, welche im Rahmen der Patentansprüche möglich sind.

Es zeigen:

Figur 1 eine seitliche Schnittansicht durch einen Mehrphasen-Schlaufenreaktor mit visualisierten dispersen Phasen gemäß einer ersten Ausführungsform der Erfindung,

Figur 2 eine seitliche Schnittansicht durch einen Teil eines Mehrphasen-Schlaufenreaktors gemäß einer weiteren Ausführungsform der Erfindung,

Figur 3 eine seitliche Schnittansicht durch einen Teil eines Mehrphasen-Schlaufenreaktors gemäß einer weiteren Ausführungsform der Erfindung,

Figur 4 eine seitliche Schnittansicht durch einen Teil eines Mehrphasen-Schlaufenreaktors gemäß einer weiteren Ausführungsform der Erfindung,

Figur 5 eine seitliche Schnittansicht durch einen Mehrphasen-Schlaufenreaktor mit visualisierten dispersen Phasen gemäß einer weiteren Ausführungsform der Erfindung,

Figur 6 eine seitliche Schnittansicht durch eine Simulation einer Strömung einer ersten dispersen Phase in einem Mehrphasen-Schlaufenreaktor gemäß einer Ausführungsform der Erfindung,

Figur 7 eine seitliche Schnittansicht durch eine Simulation einer Strömung einer zweiten dispersen Phase in einem Mehrphasen-Schlaufenreaktor gemäß einer Ausführungsform der Erfindung,

Figur 8 eine seitliche Schnittansicht durch eine Simulation einer Strömung einer zweiten dispersen Phase in einem Mehrphasen-Schlaufenreaktor gemäß einer weiteren Ausführungsform der Erfindung,

Figur 9 eine seitliche Schnittansicht durch einen Teil eines Mehrphasen-Schlaufenreaktors gemäß einer weiteren Ausführungsform der Erfindung,

Figur 10 eine seitliche Schnittansicht durch einen Teil eines Mehrphasen-Schlaufenreaktors gemäß einer weiteren Ausführungsform der Erfindung,

Figur 11 eine seitliche Schnittansicht durch einen Teil eines Mehrphasen-Schlaufenreaktors gemäß einer weiteren Ausführungsform der Erfindung und

Figur 12 eine seitliche Schnittansicht durch eine Simulation einer Strömung einer ersten dispersen Phase in einem Mehrphasen-Schlaufenreaktor gemäß einer weiteren Ausführungsform der Erfindung.

**Ausführungsformen der Erfindung**

In den Figuren werden gleiche oder ähnliche Bauteile mit gleichen Bezugszeichen bezeichnet, wobei in einigen Fällen auf eine wiederholte Beschreibung verzichtet wird. Die Figuren stellen den Gegenstand der Erfindung nur schematisch dar.

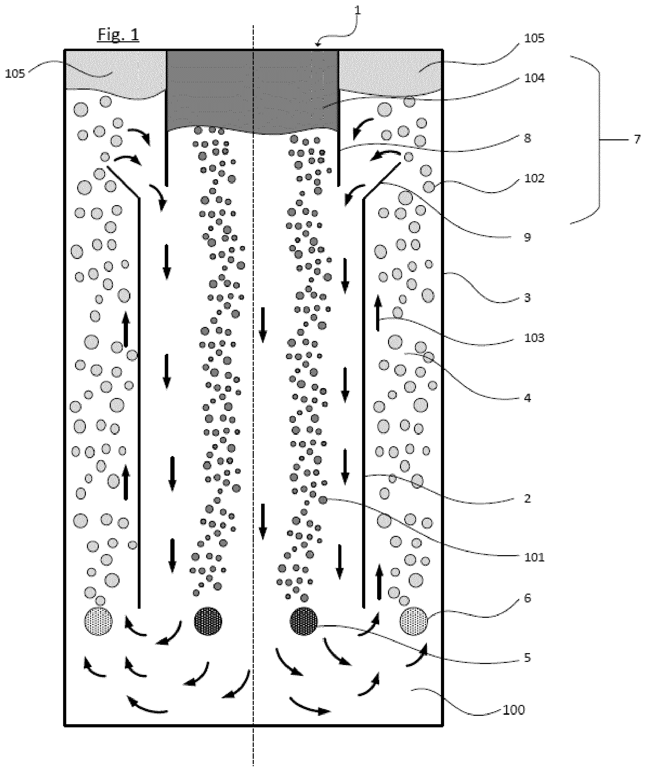

Figur 1 zeigt einen Mehrphasen-Schlaufenreaktor 1 mit einem inneren Zylinder 2, welcher in einem äußeren Zylinder 3 aufgenommen ist. Der innere Zylinder 2 kann an dem äußeren Zylinder 3 auf bekannte Art befestigt sein, beispielsweise mittels Verstrebungen, Gerüsten o.ä. (nicht dargestellt).

Der innere Zylinder 2 und der äußere Zylinder 3 definieren zwischen sich einen Zylinderringspalt 4. Dadurch, dass der innere Zylinder 2 kleiner ausgebildet ist als der äußere Zylinder 3, kann eine kontinuierliche Phase 100, beispielsweise eine Fermentationsbrühe, ober- und unterseitig des inneren Zylinders 2 vom Inneren des inneren Zylinders 2 zum Äußeren des inneren Zylinders 2, d.h. in den Zylinderringspalt 4, gelangen und umgekehrt. Der Durchmesser des inneren Zylinders 2 wird derart gewählt, dass die Strömungsgeschwindigkeit der kontinuierlichen Phase 100 im Inneren nicht zu hoch wird.

Der innere Zylinder 2 weist eine geringere Höhe auf als der äußere Zylinder 3 und ist in dessen Innerem angeordnet. Im Falle biologischer Mikroorganismen ist der Mehrphasen-Schlaufenreaktor 1 typischerweise eher breit als hoch angelegt, da die Sauerstoffzufuhr im Downcomer ausreichend gewährleistet werden muss, damit die Mikroorganismen keine unerwünschten Nebenkomponenten produzieren bzw. nicht absterben.

Im dargestellten Ausführungsbeispiel ist unterhalb des inneren Zylinders 2 ein erster Einlasser 5 angeordnet, welcher als Ringeinlasser ausgebildet ist. Mittels des ersten Einlassers 5 wird eine erste disperse Phase 101 eingelassen, im dargestellten Ausführungsbeispiel eine flüssige erste disperse Phase 101.

Unterhalb des Zylinderringspaltes 4, im dargestellten Ausführungsbeispiel auf gleicher Höhe wie der erste Einlasser 5, ist ein zweiter Einlasser 6 angeordnet, welcher ebenfalls als ein Ringeinlasser ausgebildet ist. Mittels des zweiten Einlassers 6 wird eine zweite disperse Phase 102 eingeführt, die wie dargestellt gasförmig sein kann und im Zylinderringspalt 4 aufsteigt.

Durch die Anordnung des ersten Einlassers 5 unterhalb des inneren Zylinders 2 und des zweiten Einlassers 6 unterhalb des Zylinderringspaltes 4 werden die erste disperse Phase 101 und die zweite disperse Phase 102 in räumlich getrennten Bereichen eingelassen, sodass beim Einlassen keine Vermischung erfolgt.

Typischerweise liegt ein vierphasiges System vor, welches flüssige Fermentationsbrühe, Gasblasen als Airlift, Tropfen der flüssigen Extraktionsphase und Mikroorganismen als Feststoffe aufweist. Typische Blasen- bzw. Tropfengrößen der dispersen Phasen sind beispielsweise 5 mm für den Airlift und 2 mm für die Extraktionsphase.

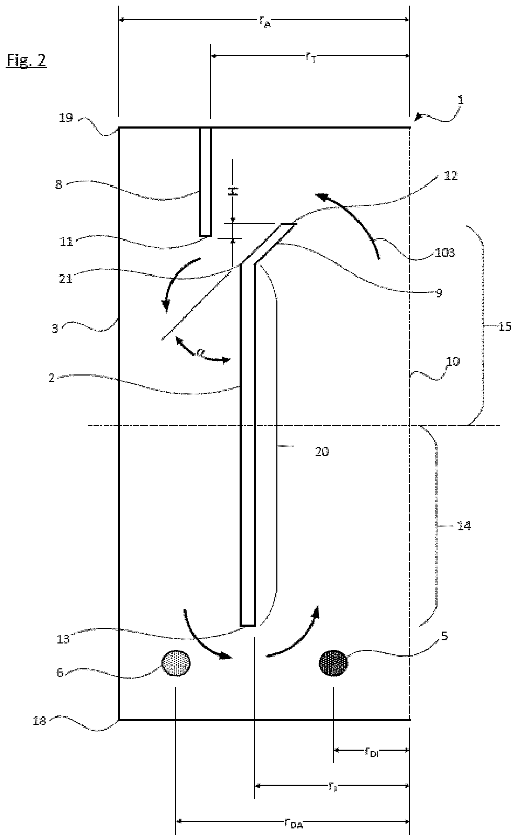

Im dargestellten Ausführungsbeispiel weist die zweite disperse Phase 102 einen größeren Volumenstrom als die erste disperse Phase 101 auf, was durch Darstellung vieler und größerer Gasblasen veranschaulicht ist. Folglich ergibt sich eine Schlaufenströmung 103 der kontinuierlichen Phase 100, derart, dass der Zylinderringspalt 4 als Upcomer und der innere Zylinder 2 als Downcomer fungieren. Der Mehrphasen-Schlaufenreaktor 1 kann durch leichte Umbauten, wie in Figur 2 gezeigt, auch umgekehrt betrieben werden, wobei dann der Volumenstrom der ersten gasförmigen dispersen Phase 101 größer gewählt wird als der Volumenstrom der zweiten flüssigen dispersen Phase 102.

Den Einlassern 5, 6 entgegengesetzt, also hier einem oberen Bereich des Mehrphasen-Schlaufenreaktors 1, ist eine Trennvorrichtung 7 angeordnet. Die Trennvorrichtung 7 umfasst eine Auffangvorrichtung 8, welche als ein Auffangzylinder ausgebildet ist. Die Auffangvorrichtung 8 ist hier beispielsweise mit einem kleineren Durchmesser ausgebildet als der innere Zylinder 2 und in diesen teilweise hineingeschoben angeordnet, was mit Bezug zu Figur 2 näher erläutert wird.

Die Trennvorrichtung 7 umfasst außerdem eine Ablenkvorrichtung 9, welche als ein bezüglich der Mittelachse des inneren Zylinders 2 nach außen abgewinkeltes Ablenkblech ausgebildet ist. Die Ablenkvorrichtung 9 ist hier einstückig mit dem inneren Zylinder 2 ausgebildet dargestellt, kann aber alternativ auch ein Zusatzteil sein, welches an diesem befestigt ist. Mittels der Ablenkvorrichtung 9 werden die Gasblasen der zweiten dispersen Phase 102 nach außen abgedrängt, sodass sie nicht mit der Schlaufenströmung 103 in den Downcomer mitgerissen werden.

Im oberen Bereich des Mehrphasen-Schlaufenreaktors 1 werden außerdem die erste disperse Phase 101 und die zweite disperse Phase 102 aufgefangen. Im Inneren der Auffangvorrichtung 8 befindet sich daher eine erste aufgefangene Phase 104, welche typischerweise Reaktionsprodukte der kontinuierlichen Phase 100 mit der ersten dispersen Phase 101 enthält, beispielsweise toxische Reaktionsprodukte oder inhibierende Reaktionsprodukte.

Außerhalb der Auffangvorrichtung 8 befindet sich eine zweite aufgefangene Phase 105, welche Reaktionsprodukte der zweiten dispersen Phase 102 mit der kontinuierlichen Phase 100 enthalten kann. Im Falle von Bioreaktoren wird hier typischerweise ungenutzter Nährstoff, wie beispielsweise Sauerstoff oder Kohlenstoffdioxid, abgefangen, welcher direkt oder wieder angereichert in den Kreislauf zurückgeführt werden kann, beispielsweise über den zweiten Einlasser 6.

Mit Bezug zu Figur 2 wird ein Bereich eines Mehrphasen-Schlaufenreaktors 1 gemäß einer weiteren Ausführungsform der Erfindung näher beschrieben, auch um die geometrischen Verhältnisse der eingesetzten Vorrichtungen darzustellen. Der Mehrphasen-Schlaufenreaktor 1 unterscheidet sich gegenüber dem in Figur 1 dargestellten Ausführungsbeispiel durch die Größe der Auffangvorrichtung 8 bezüglich der Größe des inneren Zylinders 2, durch die Ausbildung der Ablenkvorrichtung 9 und durch die Richtung der Schlaufenströmung 103. In Figur 2 ist der Radius $r_T$ der als Zylinder ausgebildeten Auffangvorrichtung 8 größer gewählt als der Radius $r_I$ des inneren Zylinders 2, im Gegensatz zu der Ausführungsform in Figur 1. Das Ablenkblech der Ablenkvorrichtung 9 ist im Gegensatz zu der Ausführungsform in Figur 1 nach innen abgewinkelt. Die Schlaufenströmung 103 ist derart, dass der innere Zylinder 2, d.h. genauer gesagt, das Innere des inneren Zylinders 2, als Upcomer fungiert und der Zylinderringspalt 4 als Downcomer fungiert.

Die Radien werden in Bezug auf eine Mittelachse 10 des Mehrphasen-Schlaufenreaktors 1 angegeben.

Wie in der mit Bezug zu Figur 1 beschriebenen Ausführungsform ist die Unterkante 11 der Auffangvorrichtung niedriger angeordnet als die Oberkante 12 des inneren Zylinders 2, welche bei im dargestellten Fall den Ringspalteintritt der Schlaufenströmung 103 definiert. Der innere Zylinder 2 ist daher in die Auffangvorrichtung 8 um eine Länge H eingeschoben angeordnet. Bei den Größenverhältnissen wird bevorzugt folgende Vorgabe eingehalten:

$$0 \le \frac{H}{D_I} \le \frac{1}{4} \,,$$

wobei mit $D_I$ der Durchmesser des inneren Zylinders 2 bezeichnet wird, welcher das Doppelte des Radius $r_I$ des inneren Zylinders 2 ist.

Den Ringspaltaustritt der Schlaufenströmung 103 bildet in der dargestellten Ausführungsform die Unterkante 13 des inneren Zylinders 2.

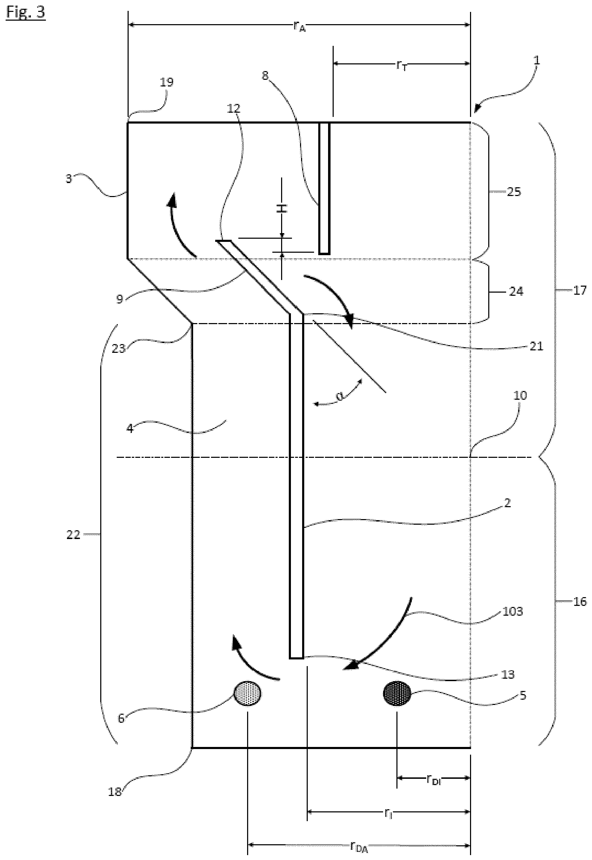

Der innere Zylinder 2 wird außerdem in einen unteren Bereich 14 und in einen oberen Bereich 15 aufgeteilt, wobei die Höhe des inneren Zylinders 2 gemäß der vorliegenden Offenbarung einschließlich der Ablenkvorrichtung 9 gemessen wird und der untere Bereich 14 und der obere Bereich 15 jeweils die Hälfte der Höhe umfassen. Ebenso wird, vgl. hierzu Figur 3, ein unterer Bereich 16 und ein oberer Bereich 17 des Mehrphasen-Schlaufenreaktors 1 bezüglich dessen Höhe definiert, welche im dargestellten Ausführungsbeispiel durch die Lage der Unterkante 18 des äußeren Zylinders 3 und der Oberkante 19 des äußeren Zylinders 3 definiert sind.

Mit Bezug zu Figur 2 weist der innere Zylinder 2 einen geraden Abschnitt 20 auf, in welchem eine tatsächliche Zylinderform vorliegt. An der Oberkante 21 des geraden Abschnittes 20 schließt sich die Ablenkvorrichtung 9 an. Im Bereich der Ablenkvorrichtung 9 ist der innere Zylinder 2 konisch ausgebildet und verjüngt sich nach oben.

Bevorzugt steht die Querschnittsfläche $A_T$ der Auffangvorrichtung 8 zur Querschnittsfläche $A_D$ des Downcomers in folgendem Zusammenhang:

$$\frac{1}{4} \le \frac{A_T}{A_D} \le 1 \,,$$

bevorzugt

$$\frac{1}{3} \le \frac{A_T}{A_D} \le \frac{1}{2}.$$

Die Querschnittsfläche $A_T$ der Auffangvorrichtung 8 wird dabei je nach Ausführungsform, ob der Downcomer durch den inneren Zylinder 2 oder durch den Zylinderringspalt 4 gebildet wird, entsprechend mittels der Fläche des Auffangzylinders entsprechend $\pi \cdot r_T^2$ gebildet oder mittels $\pi \cdot r_A^2 - \pi \cdot r_T^2$ als Kreisringfläche zwischen dem äußeren Zylinder 3 und der Auffangvorrichtung 8, wobei $r_T$ den Radius der Auffangvorrichtung 8 und $r_A$ den Radius des äußeren Zylinders 3 bezeichnen.

Für den Winkel $\alpha$ zwischen der Richtung der Ablenkvorrichtung 9 und dem geraden Abschnitt 20 des inneren Zylinders 2 ist ein Winkel zwischen 0° und 60°, besonders bevorzugt zwischen 20° und etwa 45° vorgesehen.

Bezüglich der Größe des ersten Einlassers 5 wird bevorzugt folgende Vorgabe eingehalten:

$$0 \le \frac{D_{DI}}{D_I} \le \frac{2}{3}$$

wobei $D_{DI}$ den Durchmesser des ersten Einlassers 5 und $D_I$ den Durchmesser des inneren Zylinders 2 bezeichnen, wobei die Durchmesser entsprechend das Doppelte der Radien $r_{DI}$ und $r_I$ sind.

Der Durchmesser des zweiten Ringeinlassers wird bevorzugt nach folgender Vorgabe festgelegt:

$$1,05 \cdot D_I \le D_{DA} \le 0,95 \cdot D_A,$$

wobei $D_{DA}$ den Durchmesser des zweiten Einlassers 6, $D_A$ den Durchmesser des äußeren Zylinders 3 und $D_I$ den Durchmesser des inneren Zylinders 2 bezeichnen, wobei die Durchmesser entsprechend das Doppelte der Radien $r_{DA}$, $r_A$ und $r_I$ sind.

Eine Querschnittsfläche $A_U$ des Upcomers und die Querschnittsfläche des $A_D$ des Downcomers werden im Bereich des geraden Abschnitts 20 des inneren Zylinders 2 definiert. Bezüglich der Querschnittsfläche $A_U$ des Upcomers und der Querschnittsfläche $A_D$ des Downcomers besteht folgender Zusammenhang:

$$\frac{1}{2} \le \frac{A_U}{A_D} \le \frac{2}{1},$$

bevorzugt

$$\frac{2}{3} \le \frac{A_U}{A_D} \le \frac{3}{2}.$$

Für den Fall, dass die kontinuierliche Phase 100 eine flüssige Phase ist und die dispersen Phasen 101, 102 eine flüssige Phase und eine gasförmige Phase sind, steht die Querschnittsfläche $A_G$, durch die die gasförmige Phase aufsteigt, zu der Querschnittsfläche $A_F$, durch die die flüssige Phase aufsteigt, in folgendem Zusammenhang:

$$\frac{1}{4} \le \frac{A_G}{A_F} \le 1,$$

bevorzugt

$$\frac{1}{3} \le \frac{A_G}{A_F} \le \frac{1}{2}$$

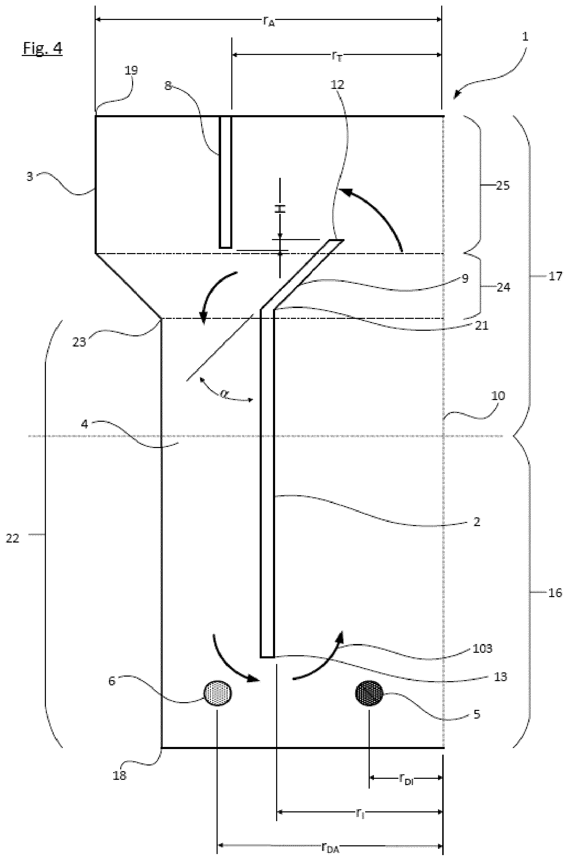

In den in Figuren 3 und 4 dargestellten Ausführungsbeispielen unterscheidet sich der Mehrphasen-Schlaufenreaktor 1 gegenüber den mit Bezug zu Figuren 1 und 2 dargestellten Ausführungsbeispiele lediglich dadurch, dass im oberen Bereich 17 des Reaktors der äußere Zylinder 3 oberhalb eines geraden, zylinderförmigen Abschnittes 22, dessen Oberkante 23 in etwa auf der Höhe der Ablenkvorrichtung 9 in diesem Ausführungsbeispiel angeordnet ist, einen konischen Abschnitt 24 und einen daran anschließenden aufgeweiteten Abschnitt 25 aufweisen. Hierdurch wird eine Verlangsamung der Schlaufenströmung 103 im oberen Bereich 17 erreicht.

Die Ausführungsbeispiele in Figur 3 und Figur 4 unterscheiden sich außerdem durch die Form der Auffangvorrichtungen 8 und Ablenkvorrichtungen 9, wie bereits mit Bezug zu Figur 1 und 2 beschrieben, sowie durch die Richtung der Schlaufenströmung 103.

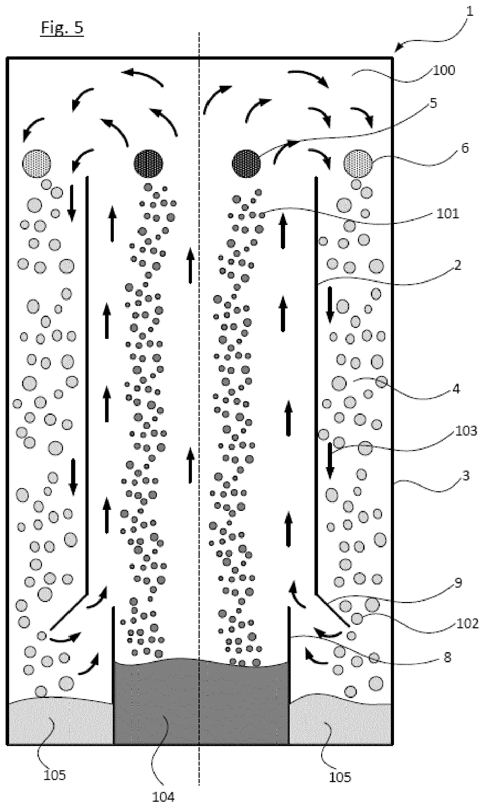

Figur 5 zeigt eine alternative Ausführungsform mit einem bezüglich Figur 1 um 180 Grad umgedrehtes Design. Die ersten und zweiten Einlasser 5, 6 der ersten und zweiten dispersen Phasen 101, 102 sind dementsprechend oberhalb des inneren Zylinders 2 angeordnet, die Ablenkvorrichtung 9 und Auffangvorrichtung 8 unterhalb dessen. Die zwei dispersen Phasen 101, 102 sind spezifisch schwerer als die kontinuierliche Phase 100.

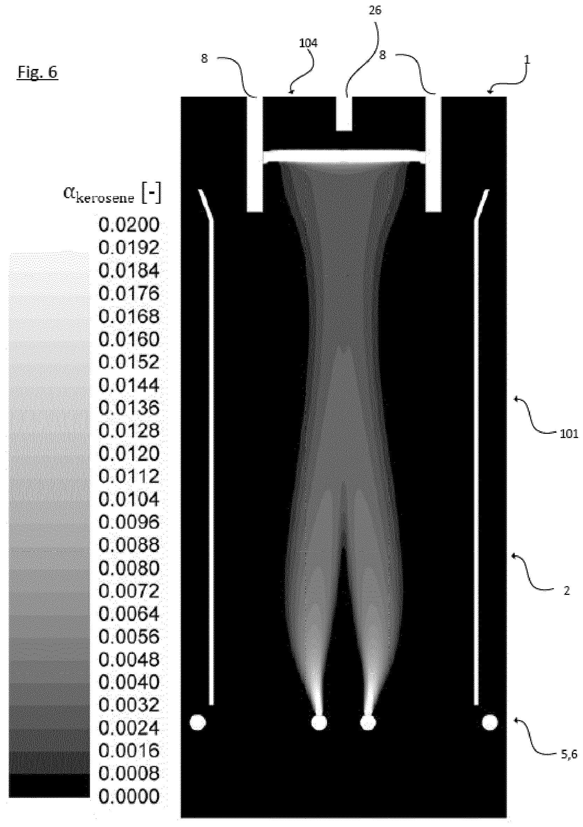

Mit Bezug zu Figuren 6 bis 8 sind Beispiele für Strömungsbilder der ersten dispersen Phase 101 und der zweiten dispersen Phase 102 dargestellt, wobei die dargestellten Mehrphasen-Schlaufenreaktoren 1 erfindungsgemäß ausgestaltet sind und erfindungsgemäß betrieben werden.

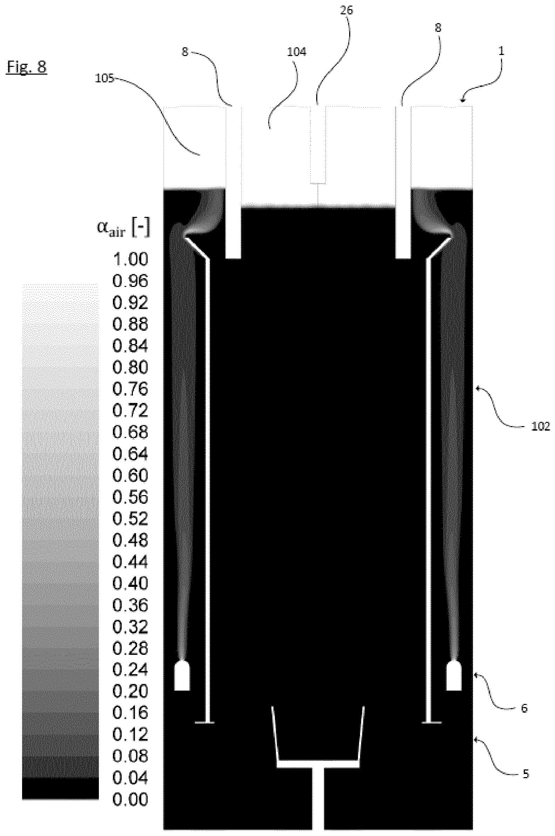

Die Figuren 6 bis 8 zeigen Simulationsergebnisse bei folgenden Parametern:
Eingangsmassenstrom der Gasphase (zweite disperse Phase): 0,5 g/s beziehungsweise 1600 l/h synthetische Luft in Figuren 6 und 7 und 0,4 g/s beziehungsweise 1200 l/h synthetische Luft in Figur 8.

Eingangsmassenstrom des Extraktionsmittels (erste disperse Phase): 0,6 g/s bzw. 2,8 l/h Kerosin.

Kontinuierliche Phase: Wasser.

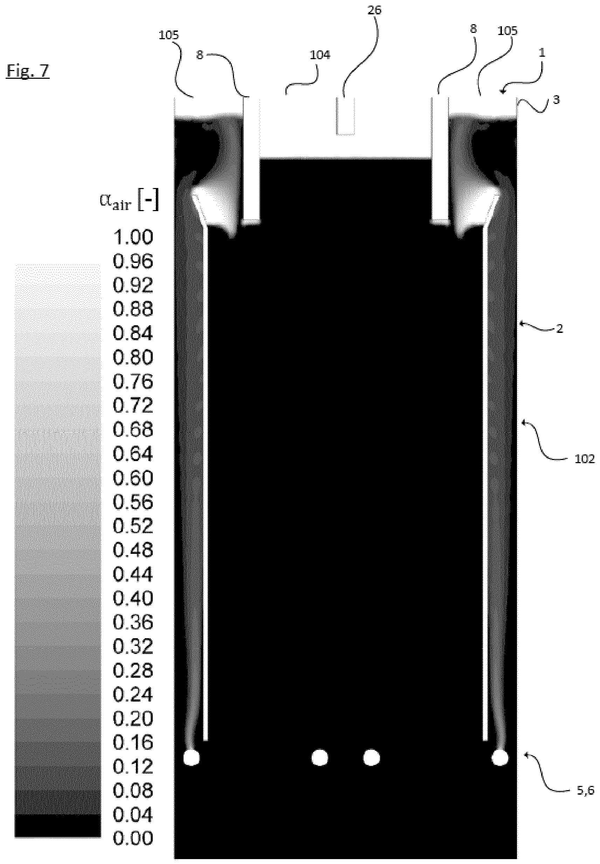

Bei dem Reaktor in Figuren 6 und 7 wurde folgende Geometrie gewählt:

$r_T$: 50mm
$r_A$: 100mm
$r_{DI}$: 14mm
$r_I$: 80mm
$r_{DA}$: 90mm
H: 15mm
Höhe innerer Zylinder: 300mm

Bei dem Reaktor in Figur 8 wurde folgende Geometrie gewählt:

$r_T$: 50mm
$r_A$: 100mm
$r_I$: 70mm
$r_{DA}$: 90mm
H: 14mm
Höhe innerer Zylinder: 300mm
Durchmesser Scheibendisperser: 25mm

Figur 6 zeigt eine seitliche Schnittansicht durch eine Simulation einer Strömung einer ersten dispersen Phase 101 in einem Mehrphasen-Schlaufenreaktor 1 gemäß einer Ausführungsform der Erfindung. Im linken Bereich von Figur 6 ist eine Legende dargestellt, die den Anteil $\alpha$ der ersten dispersen Phase 101 am Gesamtgemisch in verschiedenen Grautönen verdeutlicht. Die Strömung der ersten dispersen Phase 101 beschränkt sich im Wesentlichen auf den Bereich des Zentrums des inneren Zylinders 2.

Der erste Einlasser 5 ist dabei mit einem relativ kleinen Durchmesser ausgebildet, sodass die Strömung sich entsprechend nur im Zentrum befindet. Die erste disperse Phase 101 wird vollständig in der Auffangvorrichtung 8 aufgefangen und bildet dort die erste aufgefangene Phase 104. Der Mehrphasen-Schlaufenreaktor 1 weist außerdem ein Saugrohr 26 auf, welches im Zentrum der Auffangvorrichtung 8 angeordnet ist, um die erste aufgefangene Phase 104 abzusaugen.

Figur 7 zeigt ein Beispiel einer Strömung einer zweiten dispersen Phase 102. Im linken Bereich von Figur 7 ist eine Legende dargestellt, die den Anteil $\alpha$ der zweiten dispersen Phase 102 am Gesamtgemisch verdeutlicht. Die zweite disperse Phase 102 wird nahezu in den Bereich des inneren Zylinders 2 mitgerissen. Mit den Maßnahmen der Erfindung wird dies idealerweise komplett verhindert.

Die Strömung der zweiten dispersen Phase 102 beschränkt sich auf den Bereich des Zylinderringspaltes 4. Sie wird nicht durch die Schlaufenströmung 103 in den inneren Zylinder 2 mitgerissen, sondern vollständig außerhalb der Auffangvorrichtung 8 und innerhalb des äußeren Zylinders 3 aufgefangen. Dort bildet sie die zweite aufgefangene Phase 105.

Figur 8 zeigt ein weiteres Beispiel einer Strömung einer zweiten dispersen Phase 102. Im linken Bereich von Figur 8 ist wiederum eine Legende dargestellt, die den Anteil α der zweiten dispersen Phase 102 am Gesamtgemisch verdeutlicht.

Figur 8 zeigt dabei eine alternative Ausführungsform des Mehrphasen-Schlaufenreaktors 1, bei welcher kein Ringeinlasser sondern ein flächenmäßiger erster Einlasser 5 (Dusche) eingesetzt wird. Außerdem weist der Mehrphasen-Schlaufenreaktors 1 einen zweiten Einlasser 6 auf, welcher im unteren Bereich des Zylinderringspaltes 4 angeordnet ist und nicht unterhalb dessen, wie bei den in Figur 6 und 7 dargestellten Ausführungsformen. Auch bei dieser Ausgestaltung ist das gewünschte Verhalten der zweiten dispersen Phase 102 erreichbar.

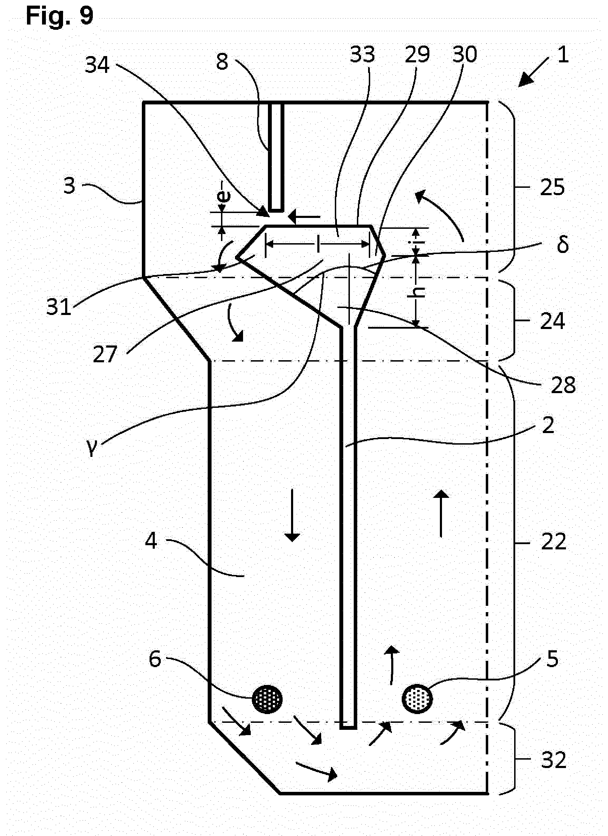

Figuren 9 bis 11 zeigen seitliche Schnittansichten durch einen Teil des Mehrphasen-Schlaufenreaktors 1 gemäß weiterer Ausführungsformen der Erfindung.

Wie in den in Figuren 3 und 4 dargestellten Ausführungsbeispielen beschrieben weist der äußere Zylinder 3 des Reaktors oberhalb des geraden, zylinderförmigen Abschnittes 22 den konischen Abschnitt 24 und den daran anschließenden aufgeweiteten Abschnitt 25 auf, um dort eine Verlangsamung der Schlaufenströmung 103 zu erreichen. Darüber hinaus weist der äußere Zylinder 3 des Reaktors in Figuren 9 bis 11 einen sich verjüngenden Abschnitt 32 auf, der sich unterhalb des zylinderförmigen Abschnitts 22 anschließt. Hierdurch wird Totvolumen im Reaktor reduziert. Der sich verjüngende Abschnitt 32 ist im dargestellten Ausführungsbeispiel unterhalb der Einlasser 5, 6 angeordnet, was vorteilhaft, aber nicht einschränkend für die Erfindung ist. Die Ausführungsform mit dem sich verjüngenden Abschnitt 32 ist auch mit den zuvor mit Bezug zu Figuren 1 bis 8 beschriebenen Ausführungsformen kombinierbar.

In Figuren 9 bis 12 sind außerdem weitere Ausführungsformen der Trennvorrichtung 7 gezeigt, wobei die Trennvorrichtung 7 einen Verdrängerkörper 27 zur Beeinflussung der Strömung zumindest einer der dispersen Phasen 101, 102 aufweist.

Der Verdrängerkörper 27 ist in den dargestellten Ausführungsbeispielen einstückig mit dem inneren Zylinder 2 ausgebildet und bildet eine Verdickung des inneren Zylinders 2. Die Verdickung umfasst umlaufend eine nach innen gerichtete Nase 30 und eine nach außen gerichtete Nase 31. Mittels der nach innen gerichteten Nase 30 werden die Blasen oder Tropfen der ersten dispersen Phase 101 nach innen abgedrängt, sodass sie bei der dargestellten Betriebsrichtung nicht mit der Schlaufenströmung 103 in den Zylinderringspalt 4 mitgerissen werden. Mittels der nach außen gerichteten Nase 31 werden die Blasen oder Tropfen der zweiten dispersen Phase 102 nach außen abgedrängt. Die nach außen gerichtete Nase 31 bildet mit dem inneren Zylinder 2 einem Winkel γ, wobei dieser bevorzugt von 30 bis 60° groß ausgebildet ist. Die nach innen gerichtete Nase 30 bildet mit dem inneren Zylinder einen Winkel δ, wobei dieser bevorzugt von 10 bis 20° groß ausgebildet ist.

Außerdem weist der Verdrängerkörper 27, genauer gesagt der in den Figuren dargestellte Ausschnitt des Verdrängerkörpers 27, im Querschnitt ein oberseitiges Plateau 29 einer Länge l auf. Das Plateau 29 bildet eine Grundfläche eines ersten Pyramidenstumpfes 33 einer Höhe i, der einen oberen Teil des Verdrängerkörpers 27 im Querschnitt bildet. Ein unterer Teil des Verdrängerkörpers 27 im Querschnitt ist als ein zweiter Pyramidenstumpf 28 der Höhe h ausgeführt. Die Pyramidenstumpfe 28, 33 sind an ihren Grundflächen aneinander angeflanscht und können insbesondere einstückig ausgebildet sein.

Bei der in Figur 9 dargestellten Ausführungsform ist die Abtrennvorrichtung 8 zylinderförmig ausgebildet und lotrecht oberhalb des Plateaus 29 angeordnet, so dass sich zwischen Plateau 29 und Abtrennvorrichtung 8 ein Spalt 34 befindet. Die Größe e des Spaltes 34 kann zum Einstellen der Strömungsgeschwindigkeit der Schlaufenströmung 103 genutzt werden. Dies ermöglicht eine weitere Prozessintensivierung durch eine variable Anpassung beider disperser Phasen an die notwendigen Prozessbedingungen, sodass beispielsweise mit dieser Vorrichtung deutlich höhere Gasvolumenströme gefahren werden können als ohne.

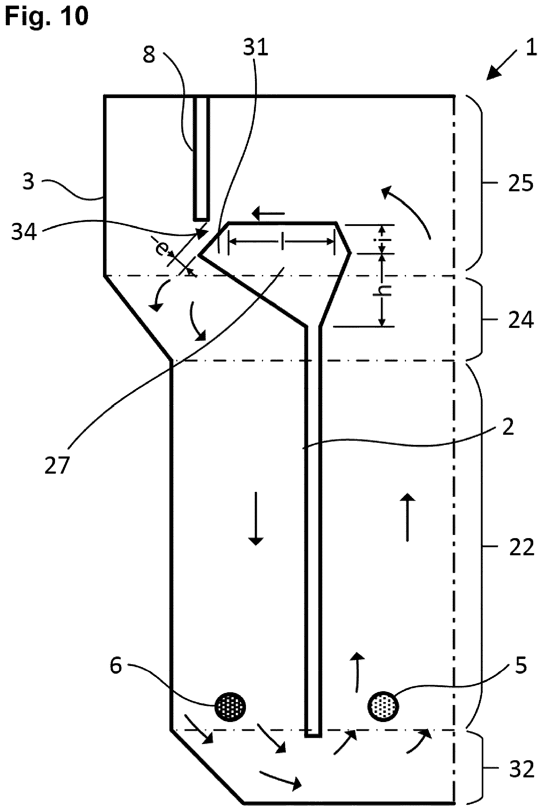

Bei der in Figur 10 dargestellten Ausführungsform ist die Abtrennvorrichtung 8 ebenfalls zylinderförmig ausgebildet, jedoch seitlich des Plateaus 29 nach außen versetzt angeordnet, so dass sich der Spalt 34 zwischen der nach außen gerichteten Nase 31 des Verdrängerkörpers 27 und der Abtrennvorrichtung 8 befindet.

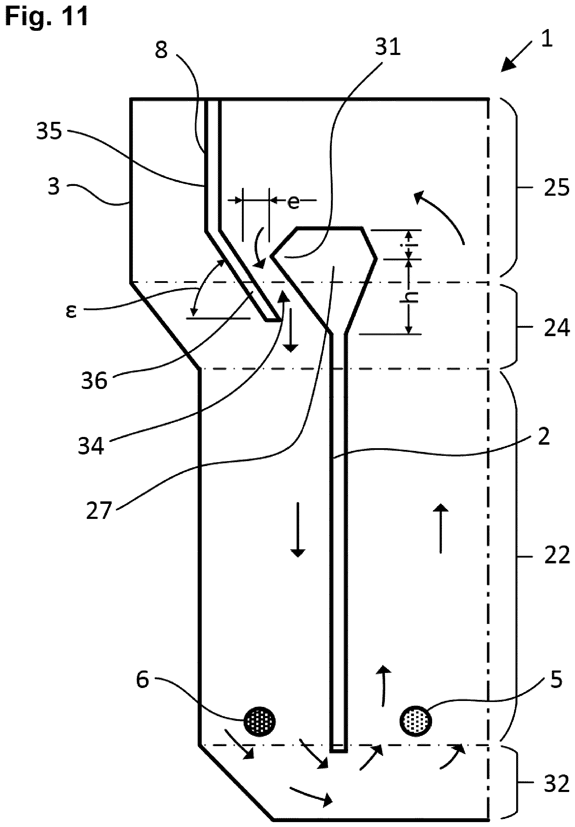

Bei der in Figur 11 dargestellten Ausführungsform umfasst die Abtrennvorrichtung 8 einen zylinderförmigen Abschnitt 35 und auf Höhe des Verdrängerkörpers 27 einen nach innen abkragenden Abschnitt 36. Der nach innen abkragende Abschnitt 35 kragt mit einem Winkel ε ab, wobei dieser bevorzugt von 30 bis 60° groß ausgebildet ist, insbesondere gleich 90°- γ sein kann. Der Spalt 34 befindet sich hier zwischen der nach außen gerichteten Nase 31 und dem nach innen abkragenden Abschnitt 36 der Abtrennvorrichtung 8.

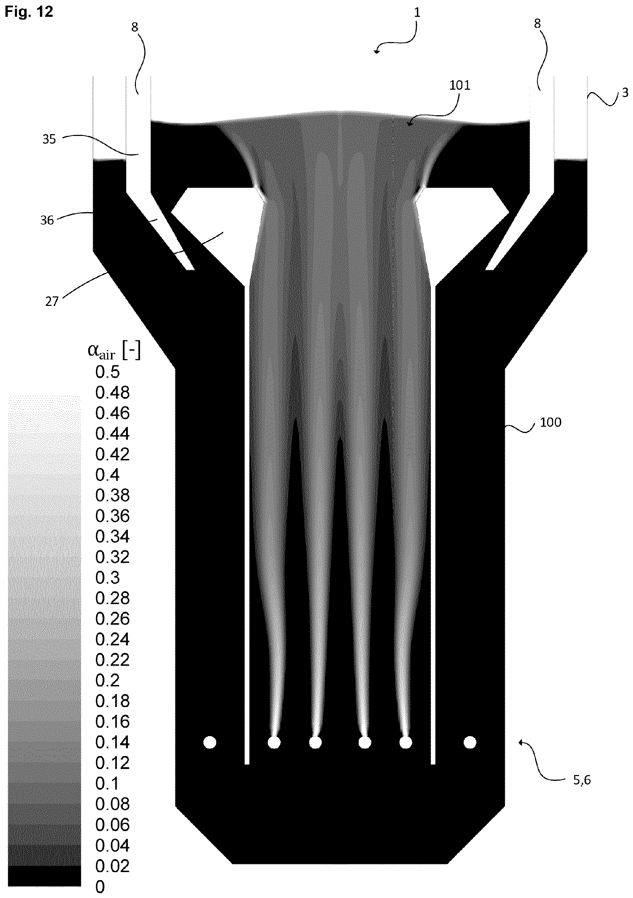

Figur 12 zeigt eine seitliche Schnittansicht durch eine Simulation einer Strömung einer ersten dispersen Phase 101 in einem Mehrphasen-Schlaufenreaktor 1 gemäß einer weiteren Ausführungsform der Erfindung.

Die Simulation ist in einem Mehrphasen-Schlaufenreaktor 1 dargestellt, der im Prinzip dem mit Bezug zu Figur 11 beschriebenen Mehrphasen-Schlaufenreaktor 1 entspricht. Durch das Hinzufügen des Verdrängerkörpers 27 wird der aufsteigenden ersten Phase 101 Platz geboten, um aus der kontinuierlichen Phase 100 auszutreten. Somit wird ein Mitreißen der ersten Phase 101 in den Bereich der aufsteigenden zweiten dispersen Phase 102 (hier nicht dargestellt) verhindert.

Bei dem in Figur 12 dargestellten Mehrphasen-Schlaufenreaktor 1 ist der nach innen abkragende Abschnitt 36 der Abtrennvorrichtung 8 im Querschnitt verjüngt ausgebildet. In sämtlichen zuvor beschriebenen Ausführungsformen kann vorgesehen sein, mit oder ohne Vorhandensein des nach innen abkragenden Abschnitts 36, dass die Abtrennvorrichtung 8 im Querschnitt zur Kante hin verjüngt ausgebildet ist.

## Patentansprüche

1. Mehrphasen-Schlaufenreaktor (1) mit einem inneren Zylinder (2) und einem äußeren Zylinder (3) unterschiedlichen Durchmessers, welche derart angeordnet sind, dass sie zwischen sich einen Zylinderringspalt (4) bilden,

   wobei der innere Zylinder (2) oder der Zylinderringspalt (4) als ein Upcomer und der jeweils andere entsprechend als ein Downcomer fungieren, so dass eine kontinuierliche Phase (100) eine Schlaufenströmung (103) ausführen kann,

   wobei ein erster Einlasser (5) für eine erste disperse Phase (101) und ein zweiter Einlasser (6) für eine zweite disperse Phase (102) derart angeordnet sind, dass die erste (101) und die zweite disperse Phase (102) räumlich getrennt voneinander in die kontinuierliche Phase (100) dispergiert werden können, wobei eine der ersten oder zweiten dispersen Phasen (101, 102) die Schlaufenströmung (103) antreiben und die andere der ersten und zweiten dispersen Phasen (101, 102) einen Gegenstrom zu der Schlaufenströmung (103) bilden können,

   und dass den Einlassern (5, 6) entgegengesetzt eine Trennvorrichtung (7) im oberen Bereich des Mehrphasen-Schlaufenreaktors (1) vorgesehen ist, die eine Vermischung der ersten und zweiten dispersen Phasen (101, 102) verhindert,

   **dadurch gekennzeichnet, dass**

   der durch den Upcomer ausgebildete Bereich von dem durch den Downcomer ausgebildeten Bereich getrennt ist und in diesen Bereichen jeweils nur eine der dispersen Phasen vorliegt,

   die Querschnittsfläche Au des Upcomers zu der Querschnittsfläche $A_D$ des Downcomers in folgendem Zusammenhang steht:

$$\frac{1}{2} \leq \frac{A_U}{A_D} \leq \frac{2}{1} \,,$$

   der erste Einlasser (5) und der zweite Einlasser (6) in einem unteren Bereich des Upcomers bzw. des Downcomers angeordnet sind, und

   die Trennvorrichtung (7) zumindest eine Auffangvorrichtung (8) für die erste (101) und/oder zweite disperse Phase (102) oder ihrer Reaktionsprodukte umfasst, wobei zum Verhindern der Mitnahme der zweiten dispersen Phase in einen Innenbereich des inneren Zylinders (2) durch die Schlaufenströmung (103) die Auffangvorrichtung (8) in den inneren Zylinder (2) oder der innere Zylinder (2) in die Auffangvorrichtung (8) eingeschoben angeordnet ist.

2. Mehrphasen-Schlaufenreaktor (1) nach Anspruch 1, **dadurch gekennzeichnet, dass** die Querschnittsfläche $A_T$ der Auffangvorrichtung (8) für die nicht schlaufeninduzierende Phase zu der Querschnittsfläche $A_D$ des Downcomers in folgendem Zusammenhang steht:

$$\frac{1}{4} \leq \frac{A_T}{A_D} \leq 1 \,,$$

   bevorzugt

$$\frac{1}{3} \leq \frac{A_T}{A_D} \leq \frac{1}{2} \,.$$

3. Mehrphasen-Schlaufenreaktor (1) nach Anspruch 1 oder 2, **dadurch gekennzeichnet, dass** die folgende Vorgabe erfüllt ist:

$$0 \leq \frac{H}{\mathrm{D_I}} \leq \frac{1}{4} \, ,$$

wobei H die Höhendifferenz zwischen einer Kante (11) der Auffangvorrichtung und der Kante (12) des inneren Zylinders und Di den Durchmesser des inneren Zylinders (2) bezeichnen.

4. Mehrphasen-Schlaufenreaktor (1) nach einem der vorhergehenden Ansprüche, **dadurch gekennzeichnet, dass** die Trennvorrichtung (7) eine Ablenkvorrichtung (9) zur Beeinflussung der Strömung zumindest einer der dispersen Phasen (101, 102) umfasst, wobei die Ablenkvorrichtung (9) bevorzugt am inneren Zylinder (2) befestigt oder einstückig mit diesem ausgebildet ist.

5. Mehrphasen-Schlaufenreaktor (1) nach Anspruch 4, **dadurch gekennzeichnet, dass** die Ablenkvorrichtung (9) vom inneren Zylinder (2) zwischen 0° und 60°, weiter bevorzugt zwischen 20° und 45° abgewinkelt ist.

6. Mehrphasen-Schlaufenreaktor (1) nach einem der vorhergehenden Ansprüche, **dadurch gekennzeichnet, dass** die Trennvorrichtung (7) einen Verdrängerkörper (27) zur Beeinflussung der Strömung zumindest einer der dispersen Phasen (101, 102) umfasst, wobei der Verdrängerkörper (27) bevorzugt am inneren Zylinder (2) befestigt oder einstückig mit diesem ausgebildet ist.

7. Mehrphasen-Schlaufenreaktor (1) nach einem der vorhergehenden Ansprüche, **dadurch gekennzeichnet, dass** der erste Einlasser (5) nach folgender Vorgabe ausgebildet ist:

$$0 \leq \frac{\mathrm{D_{DI}}}{\mathrm{D_I}} \leq \frac{2}{3} \, ,$$

wobei $\mathrm{D_{DI}}$ den Durchmesser des ersten Einlassers (5) und $\mathrm{D_I}$ den Durchmesser des inneren Zylinders (2) bezeichnen.

8. Mehrphasen-Schlaufenreaktor (1) nach einem der vorhergehenden Ansprüche, **dadurch gekennzeichnet, dass** der zweite Einlasser (6) nach folgender Vorgabe ausgebildet ist:

$$1{,}05 \cdot \mathrm{D_I} \leq \mathrm{D_{DA}} \leq 0{,}95 \cdot \mathrm{D_A} \, ,$$

wobei $\mathrm{D_{DA}}$ den Durchmesser des zweiten Einlassers (6), $\mathrm{D_A}$ den Durchmesser des äußeren Zylinders (3) und Di den Durchmesser des inneren Zylinders (2) bezeichnen.

9. Mehrphasen-Schlaufenreaktor (1) nach einem der vorhergehenden Ansprüche, **dadurch gekennzeichnet, dass** die Querschnittsfläche Au des Upcomers zu der Querschnittsfläche $A_D$ des Downcomers in folgendem Zusammenhang steht:

$$\frac{2}{3} \leq \frac{\mathrm{A_U}}{\mathrm{A_D}} \leq \frac{3}{2} \, .$$

10. Mehrphasen-Schlaufenreaktor (1) nach einem der vorhergehenden Ansprüche, **dadurch gekennzeichnet, dass** für den Fall, dass die kontinuierliche Phase (100) eine flüssige Phase ist und die dispersen Phasen (101, 102) eine flüssige Phase und eine gasförmige Phase sind, die Querschnittsfläche $A_G$, durch die die gasförmige Phase aufsteigt, zu der Querschnittsfläche $A_F$, durch die die flüssige Phase aufsteigt, in folgendem Zusammenhang steht:

$$\frac{1}{4} \leq \frac{\mathrm{A_G}}{\mathrm{A_F}} \leq 1 \, ,$$

bevorzugt

$$\frac{1}{3} \le \frac{A_G}{A_F} \le \frac{1}{2}.$$

**11.** Verfahren zum Betrieb eines Mehrphasen-Schlaufenreaktors (1) mit einem inneren Zylinder (2) und einem äußeren Zylinder (3) unterschiedlichen Durchmessers, welche derart angeordnet sind, dass sie zwischen sich einen Zylinderringspalt (4) bilden, **dadurch gekennzeichnet, dass** der innere Zylinder (2) oder der Zylinderringspalt (4) als ein Upcomer und der jeweils andere entsprechend als ein Downcomer fungieren, so dass eine kontinuierliche Phase (100) eine Schlaufenströmung (103) ausführt, wobei die Querschnittsfläche Au des Upcomers zu der Querschnittsfläche $A_D$ des Downcomers in folgendem Zusammenhang steht:

$$\frac{1}{2} \le \frac{A_U}{A_D} \le \frac{2}{1},$$

eine erste und eine zweite disperse Phase (101, 102) räumlich getrennt voneinander durch einen ersten Einlasser (5) für die erste disperse Phase (101) und einen zweiten Einlasser (6) für die zweite disperse Phase (102) eingelassen werden, so dass eine der ersten oder zweiten dispersen Phasen (101, 102) im Gleichstrom und die jeweils andere im Gegenstrom zur kontinuierlichen Phase (100) strömen, wobei der erste Einlasser (5) und der zweite Einlasser (6) in einem unteren Bereich des Upcomers bzw. des Downcomers angeordnet sind und wobei den Einlassern (5, 6) entgegengesetzt eine Trennvorrichtung (7) im oberen Bereich des Mehrphasen-Schlaufenreaktors (1) vorgesehen ist, die eine Vermischung der ersten und zweiten dispersen Phasen (101, 102) verhindert, wobei die Trennvorrichtung (7) zumindest eine Auffangvorrichtung (8) für die erste (101) und/oder zweite disperse Phase (102) oder ihrer Reaktionsprodukte umfasst, wobei zum Verhindern der Mitnahme der zweiten dispersen Phase in einen Innenbereich des inneren Zylinders (2) durch die Schlaufenströmung (103) die Auffangvorrichtung (8) in den inneren Zylinder (2) oder der innere Zylinder (2) in die Auffangvorrichtung (8) eingeschoben angeordnet ist, wobei der durch den Upcomer ausgebildete Bereich von dem durch den Downcomer ausgebildeten Bereich getrennt ist und in diesen Bereichen jeweils nur eine der dispersen Phasen vorliegt, und die kontinuierliche Phase (100) eine flüssige oder gasförmige Phase oder eine Dispersion ist, wobei

a) die erste disperse Phase (101) eine flüssige Phase ist und die zweite disperse Phase (102) eine gasförmige Phase ist, oder

b) die erste disperse Phase (101) eine gasförmige Phase ist und die zweite disperse Phase (102) eine flüssige Phase ist, oder

c) beide dispersen Phasen (101, 102) flüssige Phasen sind.

**12.** Verfahren nach Anspruch 11, **dadurch gekennzeichnet, dass** die erste disperse Phase (101) in einem unteren Bereich (14) oder unterhalb des inneren Zylinders eingelassen wird und die zweite disperse Phase (102) in einem unteren Bereich oder unterhalb des Zylinderringspaltes (4) eingelassen wird, wobei im oberen Bereich (16) des Mehrphasen-Schlaufenreaktors (1) die erste und die zweite disperse Phase (101, 102) oder ihre Reaktionsprodukte räumlich getrennt voneinander abgeführt werden.

**13.** Verfahren nach einem der Ansprüche 11 bis 12, **dadurch gekennzeichnet, dass** die kontinuierliche Phase (100) eine Fermentationsphase ist, eine der dispersen Phasen (101, 102) ein Nährgas, insbesondere Sauerstoff oder Kohlenstoffdioxid, und die andere disperse Phase (101, 102) ein Extraktionsmittel, insbesondere organisches Extraktionsmittel oder ein biokompatibles Lösungsmittel enthält.

**14.** Verfahren nach einem der Ansprüche 11 bis 13, **dadurch gekennzeichnet, dass** durch Festlegen der Volumenströme der dispersen Phasen (101, 102) die Geschwindigkeit der Schlaufenströmung (103) der kontinuierlichen Phase (100) eingestellt wird, wobei die Fließgeschwindigkeit der kontinuierlichen Phase (100) im Downcomer kleiner ist als die Aufstiegsgeschwindigkeit der im Downcomer dispergierten Phase.

**Claims**

**1.** A multiphase loop reactor (1) having an inner cylinder (2) and an outer cylinder (3) of different diameters arranged to form a cylinder annular gap (4) therebetween,

wherein the inner cylinder (2) and the cylinder annular gap (4) acts as an upcomer and the other correspondingly acts as a downcomer, so that a continuous phase (100) can perform a loop flow (103),

wherein a first inlet (5) for a first disperse phase (101) and a second inlet (6) for a second disperse phase (102) are arranged in such a way that the first (101) and the second disperse phase (102) can be dispersed spatially separated from each other into the continuous phase (100), wherein one of the first or second disperse phases (101, 102) can drive the loop flow (103) and the other of the first and second disperse phases (101, 102) can form a counterflow to the loop flow (103) and in that a separating device (7) is provided opposite the inlets (5, 6) in the upper region of the multiphase loop reactor (1), which prevents the first and second disperse phases (101, 102) from mixing,

**characterized in that**

the region formed by the upcomer is separated from the region formed by the downcomer and only one of the disperse phases is present in each of these regions,

the cross-sectional area Au of the upcomer is related to the cross-sectional area $A_D$ of the downcomer as follows:

$$\frac{1}{2} \leq \frac{A_U}{A_D} \leq \frac{2}{1} ,$$

the first inlet (5) and the second inlet (6) are arranged in a lower region of the upcomer and the downcomer, respectively, and

the separating device (7) comprises at least one collecting device (8) for the first (101) and/or second disperse phase (102) or its reaction products, wherein for preventing the entrainment of the second disperse phase into an inner region of the inner cylinder (2) by the loop flow (103), the collecting device (8) is arranged inserted into the inner cylinder (2) or the inner cylinder (2) is arranged inserted into the collecting device (8).

2. Multiphase loop reactor (1) according to claim 1, **characterized in that** the cross-sectional area $A_T$ of the collecting device (8) for the non-loop inducing phase is related to the cross-sectional area $A_D$ of the downcomer as follows:

$$\frac{1}{4} \leq \frac{A_T}{A_D} \leq 1 ,$$

preferably

$$\frac{1}{3} \leq \frac{A_T}{A_D} \leq \frac{1}{2} .$$

3. Multiphase loop reactor (1) according to claim 1 or 2, **characterized in that** the following requirement is satisfied:

$$0 \leq \frac{H}{D_I} \leq \frac{1}{4} ,$$

wherein H denotes the height difference between an edge (11) of the catcher and the edge (12) of the inner cylinder, and Di denotes the diameter of the inner cylinder (2).

4. Multiphase loop reactor (1) according to one of the preceding claims, **characterized in that** the separating device (7) comprises a deflecting device (9) for influencing the flow of at least one of the disperse phases (101, 102), the deflecting device (9) preferably being attached to or formed integrally with the inner cylinder (2).

5. Multiphase loop reactor (1) according to claim 4, **characterized in that** the deflection device (9) is angled from the inner cylinder (2) between 0° and 60°, more preferably between 20° and 45°.

6. Multiphase loop reactor (1) according to one of the preceding claims, **characterized in that** the separating device (7) comprises a displacer (27) for influencing the flow of at least one of the disperse phases (101, 102), the displacer (27) preferably being attached to or formed integrally with the inner cylinder (2).

7. Multiphase loop reactor (1) according to one of the preceding claims, **characterized in that** the first inlet (5) is formed according to the following specification: $0 \leq \dfrac{D_{DI}}{D_I} \leq \dfrac{2}{3}$, where $D_{DI}$ denotes the diameter of the first inlet (5) and $D_I$ denotes the diameter of the inner cylinder (2).

8. Multiphase loop reactor (1) according to one of the preceding claims, **characterized in that** the second inlet (6) is formed according to the following specification: $1{,}05 \cdot D_I \leq D_{DA} \leq 0{,}95 \cdot D_A$, wherein $D_{DA}$ denotes the diameter of the second inlet (6), $D_A$ denotes the diameter of the outer cylinder (3), and $D_I$ denotes the diameter of the inner cylinder (2).

9. Multiphase loop reactor (1) according to one of the preceding claims, **characterized in that** the cross-sectional area Au of the upcomer is related to the cross-sectional area $A_D$ of the downcomer as follows:

$$\frac{2}{3} \leq \frac{A_U}{A_D} \leq \frac{3}{2} .$$

10. Multiphase loop reactor (1) according to one of the preceding claims, **characterized in that**, in the case where the continuous phase (100) is a liquid phase and the dispersed phases (101, 102) are a liquid phase and a gaseous phase, the cross-sectional area $A_G$ through which the gaseous phase rises is related to the cross-sectional area $A_F$ through which the liquid phase rises as follows: $\dfrac{1}{4} \leq \dfrac{A_G}{A_F} \leq 1$, preferably

$$\frac{1}{3} \leq \frac{A_G}{A_F} \leq \frac{1}{2} .$$

11. A process of operating a multiphase loop reactor (1) having an inner cylinder (2) and an outer cylinder (3) of different diameters arranged to form a cylinder annular gap (4) therebetween,
**characterized in that**
the inner cylinder (2) or the cylinder annular gap (4) acts as an upcomer and the other acts as a downcomer, respectively, so that a continuous phase (100) performs a loop flow (103), wherein the cross-sectional area Au of the upcomer is related to the cross-sectional area $A_D$ of the downcomer as follows:

$$\frac{1}{2} \leq \frac{A_U}{A_D} \leq \frac{2}{1} ,$$

a first and a second disperse phase (101, 102) are admitted spatially separated from each other by a first inlet (5) for the first disperse phase (101) and a second inlet (6) for the second disperse phase (102), so that one of the first or second disperse phases (101, 102) flows in co-current and the respective other flows in counter-current to the continuous phase (100), the first inlet (5) and the second inlet (6) being arranged in a lower region of the upcomer and the downcomer, respectively, and a separating device (7) being provided opposite the inlets (5, 6) in the upper region of the multiphase loop reactor (1), which separating device (7) prevents mixing of the first and second disperse phases (101, 102) in the continuous phase (100) of the downcomer, respectively, and wherein a separating device (7) is provided opposite the inlets (5, 6) in the upper region of the multiphase loop reactor (1), which separating device (7) prevents mixing of the first and second disperse phases (101, 102), wherein the separating device (7) comprises at least one collecting device (8) for the first (101) and/or second disperse phase (102) or their reaction products, wherein, for preventing the entrainment of the second disperse phase into an inner region of the inner cylinder (2) by the loop flow (103), the collecting device (8) is arranged to be inserted into the inner cylinder (2) or the inner cylinder (2) is arranged to be inserted into the collecting device (8), wherein the region formed by the upcomer is separated from the region formed by the downcomer and only one of the disperse phases is present in each of these regions, and

the continuous phase (100) is a liquid or gaseous phase or a dispersion, wherein

  a) the first disperse phase (101) is a liquid phase and the second disperse phase (102) is a gaseous phase, or
  b) the first disperse phase (101) is a gaseous phase and the second disperse phase (102) is a liquid phase, or
  c) both disperse phases (101, 102) are liquid phases.

**12.** Process according to claim 11, **characterized in that** the first disperse phase (101) is admitted in a lower region (14) or below the inner cylinder and the second disperse phase (102) is admitted in a lower region or below the cylinder annular gap (4), the first and second disperse phases (101, 102) or their reaction products being discharged spatially separated from each other in the upper region (16) of the multiphase loop reactor (1).

**13.** Process according to one of claims 11 to 12, **characterized in that** the continuous phase (100) is a fermentation phase, one of the disperse phases (101, 102) contains a nutrient gas, in particular oxygen or carbon dioxide, and the other disperse phase (101, 102) contains an extractant, in particular organic extractant or a biocompatible solvent.

**14.** Process according to one of claims 11 to 13, **characterized in that** by setting the volume flow rates of the dispersed phases (101, 102), the loop flow rate (103) of the continuous phase (100) is adjusted, wherein the flow rate of the continuous phase (100) in the downcomer is smaller than the ascent rate of the phase dispersed in the downcomer.


**Revendications**

**1.** Réacteur en boucle à phases multiples (1) comportant un cylindre intérieur (2) et un cylindre extérieur (3) de diamètre différent, qui sont agencés de telle sorte qu'ils forment entre eux un passage annulaire entre cylindres (4),

  dans lequel le cylindre intérieur (2) ou le passage annulaire entre cylindres (4) fait office de tube de montée et l'autre fait en conséquence office de tube de descente, de sorte qu'une phase continue (100) peut réaliser un écoulement en boucle (103),
  dans lequel une première entrée (5) pour une première phase dispersée (101) et une seconde entrée (6) pour une seconde phase dispersée (102) sont agencées de telle sorte que les première (101) et seconde (102) phases dispersées peuvent être dispersées de manière spatialement séparée l'une de l'autre dans la phase continue (100), dans lequel l'une des première ou seconde phases dispersées (101, 102) entraîne l'écoulement en boucle (103) et l'autre des première et seconde phases dispersées (101, 102) peut former un courant opposé à l'écoulement en boucle (103),
  et en ce qu'un dispositif de séparation (7) est prévu à l'opposé des entrées (5, 6) dans la zone supérieure du réacteur en boucle à phases multiples (1), lequel dispositif de séparation empêche un mélange des première et seconde phases dispersées (101, 102),
  **caractérisé en ce que**
  la zone formée par le tube de montée est séparée de la zone formée par le tube de descente et une seule des phases dispersées est présente dans chacune de ces zones,
  l'aire de section transversale $A_U$ du tube de montée sur l'aire de section transversale $A_D$ du tube de descente satisfait à la relation suivante :

$$\frac{1}{2} \leq \frac{A_U}{A_D} \leq \frac{2}{1},$$

  la première entrée (5) et la seconde entrée (6) sont agencées dans une zone inférieure du tube de montée ou du tube de descente, et
  le dispositif de séparation (7) comprend au moins un dispositif de réception (8) pour la première (101) et/ou la seconde (102) phase dispersée ou leurs produits de réaction, dans lequel pour empêcher l'entraînement de la seconde phase dispersée dans une zone intérieure du cylindre intérieur (2) par l'écoulement en boucle (103), le dispositif de réception (8) est agencé de manière insérée dans le cylindre intérieur (2) ou le cylindre intérieur (2) est agencé de manière insérée dans le dispositif de réception (8).

2. Réacteur en boucle à phases multiples (1) selon la revendication 1, **caractérisé en ce que** l'aire de section transversale $A_T$ du dispositif de réception (8) pour la phase n'induisant pas une boucle, sur l'aire de section transversale $A_D$ du tube de descente satisfait à la relation suivante :

$$\frac{1}{4} \le \frac{A_T}{A_D} \le 1,$$

de préférence

$$\frac{1}{3} \le \frac{A_T}{A_D} \le \frac{1}{2}.$$

3. Réacteur en boucle à phases multiples (1) selon la revendication 1 ou 2, **caractérisé en ce que** la condition suivante est satisfaite :

$$0 \le \frac{H}{D_I} \le \frac{1}{4},$$

dans laquelle H représente la différence de hauteur entre un bord (11) du dispositif de réception et le bord (12) du cylindre intérieur, et $D_I$ représente le diamètre du cylindre intérieur (2).

4. Réacteur en boucle à phases multiples (1) selon l'une des revendications précédentes, **caractérisé en ce que** le dispositif de séparation (7) comprend un dispositif de déviation (9) destiné à influer sur l'écoulement d'au moins une des phases dispersées (101, 102), dans lequel le dispositif de déviation (9) est de préférence fixé sur le cylindre intérieur (2) ou est formé d'un seul tenant avec celui-ci.

5. Réacteur en boucle à phases multiples (1) selon la revendication 4, **caractérisé en ce que** le dispositif de déviation (9) par rapport au cylindre intérieur (2) est incliné entre 0° et 60°, de manière plus préférée entre 20° et 45°.

6. Réacteur en boucle à phases multiples (1) selon l'une des revendications précédentes, **caractérisé en ce que** le dispositif de séparation (7) comprend un corps de refoulement (27) pour influer sur l'écoulement d'au moins une des phases dispersées (101, 102), dans lequel le corps de refoulement (27) est de préférence fixé sur le cylindre intérieur (2) ou est formé d'un seul tenant avec celui-ci.

7. Réacteur en boucle à phases multiples (1) selon l'une des revendications précédentes, **caractérisé en ce que** la première entrée (5) est formée d'après la condition suivante :

$$0 \le \frac{D_{DI}}{D_I} \le \frac{2}{3},$$

dans laquelle $D_{DI}$ représente le diamètre de la première entrée (5) et $D_I$ représente le diamètre du cylindre intérieur (2).

8. Réacteur en boucle à phases multiples (1) selon l'une des revendications précédentes, **caractérisé en ce que** la seconde entrée (6) est formée d'après la condition suivante :

$$1,05 \cdot D_I \le D_{DA} \le 0,95 \cdot D_A,$$

dans laquelle $D_{DA}$ représente le diamètre de la seconde entrée (6), $D_A$ représente le diamètre du cylindre extérieur (3) et $D_I$ représente le diamètre du cylindre intérieur (2).

9. Réacteur en boucle à phases multiples (1) selon l'une des revendications précédentes, **caractérisé en ce que** l'aire de section transversale $A_U$ du tube de montée sur l'aire de section transversale $A_D$ du tube de descente satisfait à la relation suivante :

$$\frac{2}{3} \leq \frac{A_U}{A_D} \leq \frac{3}{2}.$$

10. Réacteur en boucle à phases multiples (1) selon l'une des revendications précédentes, **caractérisé en ce que** dans le cas où la phase continue (100) est une phase liquide et les phases dispersées (101, 102) sont une phase liquide et une phase gazeuse, l'aire de section transversale $A_G$ à travers laquelle la phase gazeuse monte, sur l'aire de section transversale $A_F$ à travers laquelle la phase liquide monte, satisfait à la relation suivante :

$$\frac{1}{4} \leq \frac{A_G}{A_F} \leq 1,$$

de préférence

$$\frac{1}{3} \leq \frac{A_G}{A_F} \leq \frac{1}{2}.$$

11. Procédé pour faire fonctionner un réacteur en boucle à phases multiples (1) comportant un cylindre intérieur (2) et un cylindre extérieur (3) de diamètre différent, qui sont agencés de telle sorte qu'ils forment entre eux un passage annulaire entre cylindres (4),
**caractérisé en ce que**
le cylindre intérieur (2) ou le passage annulaire entre cylindres (4) fait office de tube de montée et l'autre fait en conséquence office de tube de descente, de sorte qu'une phase continue (100) peut réaliser un écoulement en boucle (103), dans lequel l'aire de section transversale $A_U$ du tube de montée sur l'aire de section transversale $A_D$ du tube de descente satisfait à la relation suivante :

$$\frac{1}{2} \leq \frac{A_U}{A_D} \leq \frac{2}{1},$$

**une première et une seconde phases dispersées** (101, 102) sont admises de manière spatialement séparée l'une de l'autre par une première entrée (5) pour la première phase dispersée (101) et une seconde entrée (6) pour la seconde phase dispersée (102), de sorte que l'une des première ou seconde phases dispersées (101, 102) s'écoule en courant parallèle et l'autre s'écoule à contre-courant de la phase continue, dans lequel la première entrée (5) et la seconde entrée (6) sont agencées dans une zone inférieure du tube de montée ou du tube de descente et dans lequel un dispositif de séparation (7) est prévu de manière opposée aux entrées (5, 6) dans la zone supérieure du réacteur en boucle à phases multiples (1), lequel dispositif de séparation empêche un mélange des première et seconde phases dispersées (101, 102), dans lequel le dispositif de séparation (7) comprend au moins un dispositif de réception (8) pour la première (101) et/ou la seconde (102) phase dispersée ou leurs produits de réaction, dans lequel pour empêcher l'entraînement de la seconde phase dispersée dans une zone intérieure du cylindre intérieur (2) par l'écoulement en boucle (103), le dispositif de réception (8) est agencé de manière insérée dans le cylindre intérieur (2) ou le cylindre intérieur (2) est agencé de manière insérée dans le dispositif de réception (8), dans lequel la zone formée par le tube de montée est séparée de la zone formée par le tube de descente et une seule des phases dispersées est présente dans chacune de ces zones, et
la phase continue (100) est une phase liquide ou gazeuse ou une dispersion, dans lequel

a) la première phase dispersée (101) est une phase liquide et la seconde phase dispersée (102) est une phase gazeuse, ou

b) la première phase dispersée (101) est une phase gazeuse et la seconde phase dispersée (102) est une phase liquide, ou

c) les deux phases dispersées (101, 102) sont des phases liquides.

12. Procédé selon la revendication 11, **caractérisé en ce que** la première phase dispersée (101) est admise dans une zone inférieure (14) ou en dessous du cylindre intérieur et la seconde phase dispersée (102) est admise dans une zone inférieure ou en dessous du passage annulaire entre cylindres (4), dans lequel dans la zone supérieure (16) du réacteur en boucle à phases multiples (1), les première et seconde phases dispersées (101, 102) ou leurs produits de réaction sont évacués de manière spatialement séparée les uns des autres.

13. Procédé selon l'une des revendications 11 à 12, **caractérisé en ce que** la phase continue (100) est une phase de fermentation, l'une des phases dispersées (101, 102) contient un gaz nutritif, en particulier de l'oxygène ou du dioxyde de carbone, et l'autre phase dispersée (101, 102) contient un agent d'extraction, en particulier un agent d'extraction organique ou un solvant biocompatible.

14. Procédé selon l'une des revendications 11 à 13, **caractérisé en ce que** la vitesse de l'écoulement en boucle (103) de la phase continue (100) est réglée en fixant les débits volumiques des phases dispersées (101, 102), dans lequel la vitesse d'écoulement de la phase continue (100) dans le tube de descente est inférieure à la vitesse de montée de la phase dispersée dans le tube de descente.

Fig. 1

EP 3 423 183 B1

Fig. 2

Fig. 3

Fig. 4

Fig. 5

Fig. 6

$\alpha_{kerosene}$ [-]

0.0200
0.0192
0.0184
0.0176
0.0168
0.0160
0.0152
0.0144
0.0136
0.0128
0.0120
0.0112
0.0104
0.0096
0.0088
0.0080
0.0072
0.0064
0.0056
0.0048
0.0040
0.0032
0.0024
0.0016
0.0008
0.0000

Fig. 7

Fig. 8

# Fig. 9

**Fig. 10**

## Fig. 11

**Fig. 12**

$\alpha_{air}$ [-]

**IN DER BESCHREIBUNG AUFGEFÜHRTE DOKUMENTE**

**In der Beschreibung aufgeführte Patentdokumente**

- EP 1060787 B1

- US 4482524 A

**In der Beschreibung aufgeführte Nicht-Patentliteratur**

- **SAJC, L. ; OBRADOVIC, B. ; VUKOVIC, D. ; BUGARSKI, B. ; GRUBISIC, D. ; VUNJAK-NOKAVOVIC, G.** Hydrodynamics and Mass Transfer in a Four-Phase External Loop Air Lift Bioreactor. American Chemical Society and American Institute of Chemical Engineers, 1995, vol. 11, 420-428

- **LE-CLECH, P. ; CHEN, V. ; FANE, T. A. G.** Fouling in membrane bioreactors used in wastewater treatment. *Journal of Membrane Science,* 2006, vol. 284, 17-53